# EUROPEAN PATENT SPECIFICATION

(11) **EP 4 200 653 B1**
(45) Date of publication and mention of the grant of the patent: **09.12.2026**
(21) Application number: 21765971.3
(22) Date of filing: 13.08.2021
(51) Int. Cl.: G01V 5/00, G01T 1/29

(54) **SELF-ALIGNING ARRAY OF DETECTOR CELLS**
SELBST-AUSRICHTENDER ANORDNUNG VON DETEKTORZELLEN
DISPOSITIF D'AUTO-ALIGNEMENT DE CELLULES DE DETECTION

(30) Priority: 20.08.2020 GB 202013016
(43) Date of publication of application: 28.06.2023
(73) Proprietor: Smiths Detection France S.A.S., 94400 Vitry-sur-Seine (FR)
(72) Inventor: MAITREJEAN, Serge, 94400 Vitry-sur-Seine (FR)
(74) Representative: Vienne, Aymeric Charles Emile
(86) International application number: PCT/GB2021/052108
(87) International publication number: WO 2022/038339

(56) References cited:
- EP-A2- 1 005 832
- WO-A1-2017/192597
- WO-A2-2007/014099
- US-B2- 10 310 099
- US-B2- 7 570 736

## Description

### Field of Invention

The invention relates, but is not limited to, a method for determining a flux of inspection radiation. The invention also relates to associated apparatus and an associated computer program or computer program product.

### Background of Invention

For high energy radioscopy applications (e.g. scanners for cargo inspection), the detectors (such as scintillator/photodiodes-based detectors or semi-conductor detectors) have an important thickness (e.g. several centimetres) in the direction of propagation of the flux of inspection radiation, in order to detect a large fraction of the incident flux and provide reliable imaging data for which the quantum Poisson noise is as low as possible.

Inspection systems usually comprise an array of a plurality of detectors in one or more directions perpendicular to the direction of the flux of inspection radiation, for providing spatial resolution in the one or more directions (the typical pitch of the plurality of detectors in the one or more directions is of a few millimeters).

Because of the thickness of the detectors, the detectors must be oriented towards the focal spot of emission of the flux of inspection radiation. This is because, while the resolution is preserved for the detector facing the focal spot, if the detectors are not oriented towards the focal spot the spatial resolution is affected by the parallax effect. The spatial resolution of the detectors which are not oriented towards the focal spot is degraded because the flux of inspection radiation is crossing several contiguous detectors before being absorbed. The resolution is increasingly degraded with the angle between the beams of the inspection radiation and a direction normal to the detectors' entrance face.

Therefore, the detectors of any conventional inspection system must be carefully aligned, and each detector must precisely point towards the focal spot. The alignment requirement for the detectors of the conventional inspection systems has important mechanical consequences on the mechanical design and on mechanical tolerances of the conventional inspection systems.

The required alignment is time consuming when manufacturing the inspection system or when changing critical elements in the inspection system, like the inspection radiation source or the detectors. The required alignment also makes it impossible to have a single line of detection for multi-view systems, and a conventional dual-view inspection system must have a dual-line of detection.

WO2007/014099 discloses an x-ray and tomosynthesis and dual spectra machine, which transmits inspection radiation through an object to impinge on at least one array of detector cells extending in a plane and obtaining signal data associated with each detector cell of the array.

### Summary

Aspects and embodiments of the invention are set out in the appended claims. These and other aspects and embodiments of the invention are also described herein.

### Brief Description of Drawings

Figure 1 schematically illustrates a first example method according to the disclosure;
Figure 2 schematically illustrates an example system comprising an example array according to the disclosure;
Figure 3 schematically illustrates a detail of rows of an array according to the disclosure;
Figure 4 schematically illustrates a graphical representation of the coefficient C for a detector cell in (i',j') intercepting the beams incident on three contiguous rows (i-1, i and i+1);
Figure 5 schematically illustrates the dependence of each coefficient *Cᵢⁱ_{'j'}* on some parameters of the inspection system;
Figure 6 schematically illustrates example steps of a method of conditioning a matrix Mₖᵢ such that the matrix Mₖᵢ does not have significant coefficients far from the diagonal;
Figure 7 schematically illustrates example steps of a method of estimating each coefficient substantially around the diagonal of the matrix Mₖᵢ;
Figure 8 schematically illustrates that determining the coefficients may be based on the parameters H, D, z, y, p_{z}, p_{y}, i, i', j' of Figure 5 and the angles ***Θᵢ*** and Θ**_{*i*+1}** which are the angle bracketing the inspection radiation incident on row i;
Figure 9A schematically illustrates that the beams of inspection radiation are substantially parallel between two adjacent rows;
Figure 9B schematically illustrates the relatively limited dependency of coefficients C on D;
Figure 10 schematically illustrates the periodicity p_{z} of the coefficients C according to the parameter H,
Figure 11 schematically illustrates that coefficients of a horizontal array may be calculated in a similar way by choosing the right values for H and D;
Figure 12 schematically illustrates that a distance p_{y} between the columns of the array in the direction parallel to the depth direction of the array may vary along the direction parallel to the depth direction of the array,
Figure 13 schematically illustrates that some columns closer to the radiation source may be made of a lower atomic number material, and some columns further from the radiation source are made of higher atomic number material;
Figures 14A and 14B schematically illustrate that each row may be shifted, with respect to an adjacent row in the array in the direction parallel to the longitudinal direction (O'D) of the array; and
Figure 15 schematically illustrates an apparatus comprising a processor and a memory.

### Specific Description of Example Embodiments

### Overview

The disclosure describes several embodiments. In embodiments of the disclosure, detector cells of at least one array are arranged in a first plurality of detector cells (e.g. arranging the detector cells in rows in a longitudinal direction of the array) and in a second plurality of detector cells (e.g. arranging the detector cells in columns in a depth direction perpendicular to the longitudinal direction). A described method for determining a flux of inspection radiation comprises obtaining signal data associated with each detector cell of the array and determining the flux of the inspection radiation incident on each row of the array, based on the obtained signal data.

The determined flux enables generating an inspection image, without the need for the detectors to be aligned towards the focal spot of the inspection radiation source. The detector cells may thus be referred to as self-aligning in the present disclosure. Reciprocally, it should be understood that the position of the inspection radiation source with respect to the array of detector cells is not critical for generating the inspection image. Therefore, the inspection radiation source may be moved with respect to the array of detector cells (e.g. for applications such as computed tomography for inspection of cargo) and/or the inspection radiation system may comprise several inspection radiation sources for one array of detector cells.

Inspection systems implementing the disclosure are easier and cheaper to manufacture compared to equivalent conventional inspection systems.

The disclosure may be applied to single view or muti-view systems (with several inspection radiation sources and/or several arrays of detector cells).

### Detailed Description of Example Embodiments

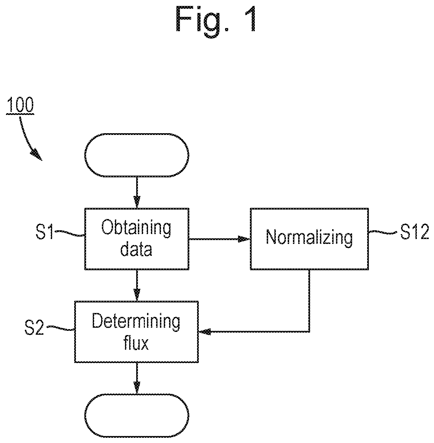

Figure 1 schematically illustrates a first example method 100 for determining a flux of inspection radiation, according to the disclosure.

In the method 100 of Figure 1, the method 100 comprises obtaining at S1 signal data, and determining, at S2, the flux of the inspection radiation.

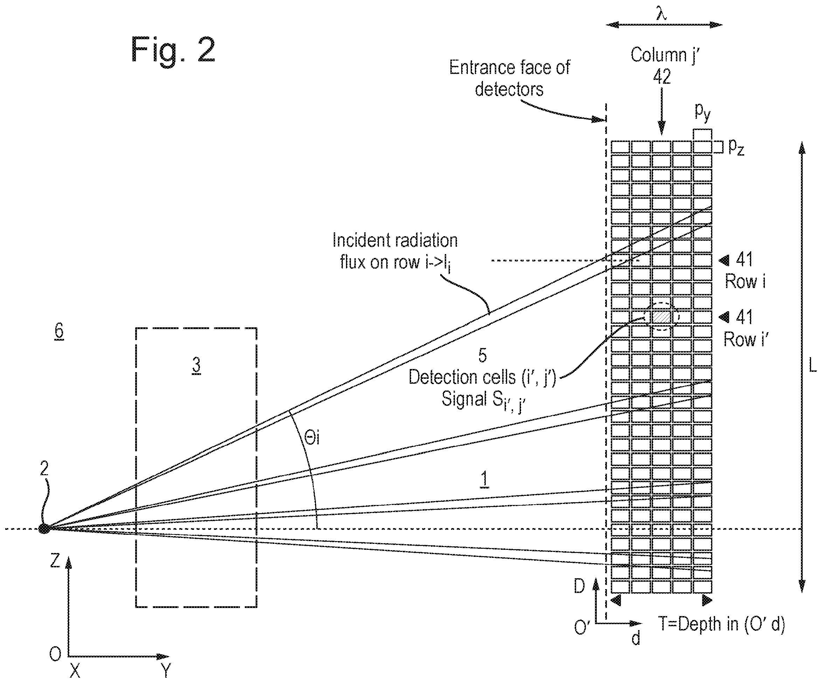

Figure 2 schematically illustrates inspection radiation 1 emitted by a radiation source 2 and transmitted through cargo 3 to inspect substantially in a transmission plane (YOZ). The flux of inspection radiation 1 is incident, after transmission through the cargo 3, on at least one array 4 of detector cells 5 extending in a plane (e.g. plane of Figure 2) substantially parallel to the transmission plane (YOZ).

In Figure 2, the array 4 has a depth direction (O'd), and a longitudinal direction (O'D) substantially perpendicular to the depth direction (O'd).

The detector cells 5 are configured in a first plurality L forming substantially rows 41 of the array 4. In Figure 2, each row 41 of detector cells 5 extends substantially along a direction parallel to the depth direction (O'd) of the array 4.

The detector cells 5 are further configured in a second plurality λ forming substantially at least two columns 42 of the array 4. In Figure 2, each column 42 of detector cells 5 extends substantially along a direction parallel to the longitudinal direction (O'D) of the array 4.

In Figure 2, direction (OX) (which is perpendicular to the plane (YOZ)) is the direction of scanning of the cargo 3, i.e. the direction of mutual displacement of the cargo 3 with respect to an inspection system 6 comprising the source 1 and the array 4.

As it will be apparent in the disclosure, the depth direction (O'd) of the array 4 may not be strictly perpendicular to the longitudinal direction (O'D).

In Figure 2, a distance p_{y} between the columns 42 of the array 4 is a constant. As it will be apparent in the disclosure, the distance p_{y} may not be a constant. In Figure 2, T is the total thickness of the array 4 in the depth direction (O'd). *θᵢ* is the incident angle of the inspection radiation 1 on row i of the array 4.

In Figure 2, a pitch p_{z} between the rows 41 of the array 4 is a constant. The constant pitch p_{z} allows a homogeneous resolution in the direction (O'D).

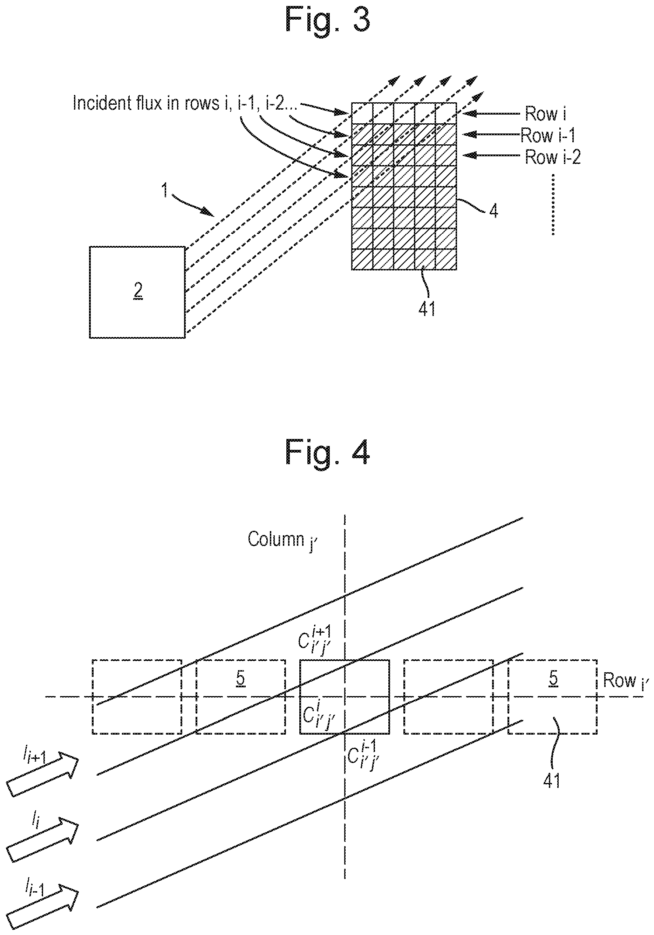

An inspection image of the cargo 3 may be generated using the flux of inspection radiation 1 incident on rows 41 of the array 4 (and the method may comprise generating the inspection image of the cargo, based on the determined flux *Iᵢ* of the inspection radiation incident on row i, for each row i such as 1≤i≤L). As illustrated in Figures 2 and 3, when the rows 41 of the array 4 are not aligned with the source 2, the total signal of a given row 41 depends on the incident flux on several rows in the neighbourhood of the given row 41.

In order to take into account the incident flux on the several rows in the neighbourhood of any given row, in Figure 1, obtaining at S1 the signal data comprises obtaining the signal data *S_{i'j'}* associated with each detector cell 5 of the array 4.

As illustrated in Figure 2, each detector cell 5 is located in (i',j') at an intersection of a column j' (numerical reference 42) and a row i' (numerical reference 41) of the array 4.

The obtained signal data S for the array 4 of detector cells 5 is such that: $S = F \left(I, R\right)$ (Eq. 1)
with *I* being a flux assembly corresponding to the flux of the inspection radiation incident on the rows of the array,
*R* being a contribution arrangement of coefficients ${R}_{i ′ j ′}^{i}$ for the array of detector cells, representing a contribution of a beam of the inspection radiation, incident on row i such that 1≤i≤L, to the signal data *S_{i'j'}* of the detector cell located in (i',j') incident on the rows i of the array, and
*F* being a known function of *I* and *R*.

The equation (Eq. 1) above enables to determine at S2 the flux *Iᵢ* of the inspection radiation incident on row i, for each row i such that 1≤i≤L, based on the obtained signal data *S_{i'j'}* and the coefficient ${R}_{i ′ j ′}^{i}$ for each detector cell located in (i',j') at the intersection of the column j' and the row i' of the array.

The incident flux on the rows 41 enable to generate an inspection image with optimal resolution in the longitudinal direction (O'D), regardless of the position and the angle of incidence of the flux of the inspection radiation 1 on the array 4.

In order to take into account the different behaviors of the detector cells 5 under irradiation, the signal may be normalized with respect to a value one or to any arbitrary number which may represent the full scale inspection radiation obtained when no object is placed in the irradiation radiation.

The method 100 may thus comprise the optional step S12 comprising normalizing the obtained signal data *S*, such that: ${S}_{i ′ j ′}^{N} = \frac{{S}_{i ′ j ′}}{{S}_{i ′ j ′}^{0}}$ with ${S}_{i ′ j ′}^{0}$ being a signal obtained when no object is placed in the irradiation radiation.

Alternatively or additionally, the optional step S12 may comprise normalizing the contribution arrangement R, such that: ${C}_{i ′ j ′}^{i} = \frac{{R}_{i ′ j ′}^{i}}{{\sum }_{k = 1}^{L} {R}_{i ′ j ′}^{k}}$

At the end of S12, the obtained signal may be such that: ${S}^{N} = {F}^{N} \left(I, C\right)$ with *F^{N}* a known function of *I* and *C*.

In examples where the detector cells 5 do have a linear response as a function of the flux input, the known function F may be a linear function such that: ${S}_{i ′ j ′} = {\sum }_{i = 1}^{L} {R}_{i ′ j ′}^{i} {I}_{i}$ with *Iᵢ* the flux of the inspection radiation incident on row i, and
*Rᵢⁱ_{'j'}* representing a contribution of a beam of the inspection radiation, incident on row i, to the signal data *S_{i'j'}* of the detector cell located in (i',j').

In cases where it is desired that the signal data and the contribution arrangement are normalized, normalizing at S12 the obtained signal data ${S}_{i ′ j ′}^{N}$ for each detector cell being located in (i',j') may be such that: ${S}_{i ′ j ′}^{N} = \frac{{S}_{i ′ j ′}}{{S}_{i ′ j ′}^{0}} = \frac{{S}_{i ′ j ′}}{{\sum }_{k = 1}^{L} {R}_{i ′ j ′}^{k} {I}_{k}^{0}} = \frac{{\sum }_{i = 1}^{L} {R}_{i ′ j ′}^{i} {I}_{i}}{{\sum }_{k = 1}^{L} {R}_{i ′ j ′}^{k} {I}_{k}^{0}} = {\sum }_{i} \left(\frac{{R}_{i ′ j ′}^{i} {I}_{i}}{{\sum }_{k = 1}^{L} {R}_{i ′ j ′}^{k}}\right) = {\sum }_{i} {C}_{i ′ j ′}^{i} {I}_{i}$
with ${S}_{i ′ j ′}^{N} ∈ \left[0, 1\right]$,
with ${S}_{i ′ j ′}^{0} = {\sum }_{i = 1}^{L} {R}_{i ′ j ′}^{i} {I}_{i}^{0}$ with *Iᵢ*⁰ being the flux of full-scale inspection radiation obtained when no object is placed in the irradiation radiation, incident on row i,
with *Iᵢ*⁰ being chosen equal to 1 for each row i such that 1≤i≤L, which implies the *Iᵢ* to have values in [0,1],
with each coefficient *Cᵢⁱ_{'j'}* being such that ${C}_{i ′ j ′}^{i} = \frac{{R}_{i ′ j ′}^{i}}{{\sum }_{k}^{L} {R}_{i ′ j ′}^{k}}$, and
with ${\sum }_{i} {C}_{i ′ j ′}^{i} = 1$.

Eq. 2 may be solved, because Eq. 2 is overdetermined: the number of unknowns is the fluxes *I* in the rows, while the number of data acquired is the total number of obtained signal S for the detector cells, which is larger than the number of unknowns.

In cases where the signal data and the contribution arrangement are indeed normalized, determining at S2 the flux *Iᵢ* of the inspection radiation incident on row i, for each row i such as 1≤i≤L, is based on the normalized uniform signal data ${S}_{i ′ j ′}^{N}$ and the coefficient ${C}_{i ′ j ′}^{i}$ for each detector cell located in (i',j') at the intersection of the column j' and the row i' of the array.

In some cases, determining at S2 the flux *Iᵢ* of the inspection radiation incident on row i, for each row i such that 1≤i≤L, may comprise using a least squares regression to find a set of fluxes *Iᵢ* which minimizes a criterion Lₛ, such that: ${L}_{S} = {\sum }_{i ′ , j ′} {\left({S}_{i ′ j ′}^{N}-{\sum }_{i} {C}_{i ′ j ′}^{i} {I}_{i}\right)}^{2} .$

In such cases, the set of fluxes *Iᵢ* which minimizes the criterion Lₛ is determined using a gradient minimalization technique.

Alternatively or additionally, the set of fluxes *Iᵢ* which minimizes the criterion Lₛ may be determined by determining a solution of a matrix equation Mₖᵢ such that: $∀ k , {\sum }_{i ′ , j ′} {C}_{i ′ j ′}^{k} {S}_{i ′ j ′}^{N} = {\sum }_{i} \left({{{\sum }_{i ′ , j ′} {C}_{i ′ j ′}^{k} . {C}_{i ′ j ′}^{i}}_{︸}}_{{M}_{ki}}\right) . {I}_{i}$

Figure 4 schematically illustrates a graphical representation of the coefficient C for a detector cell 5 in (i',j') intercepting the beams incident on three contiguous rows 41 (i-1, i and i+1). The coefficient ${C}_{i ′ j ′}^{i}$ is the proportion of the signal in (i',j') coming from the inspection radiation 1 incident on row i.

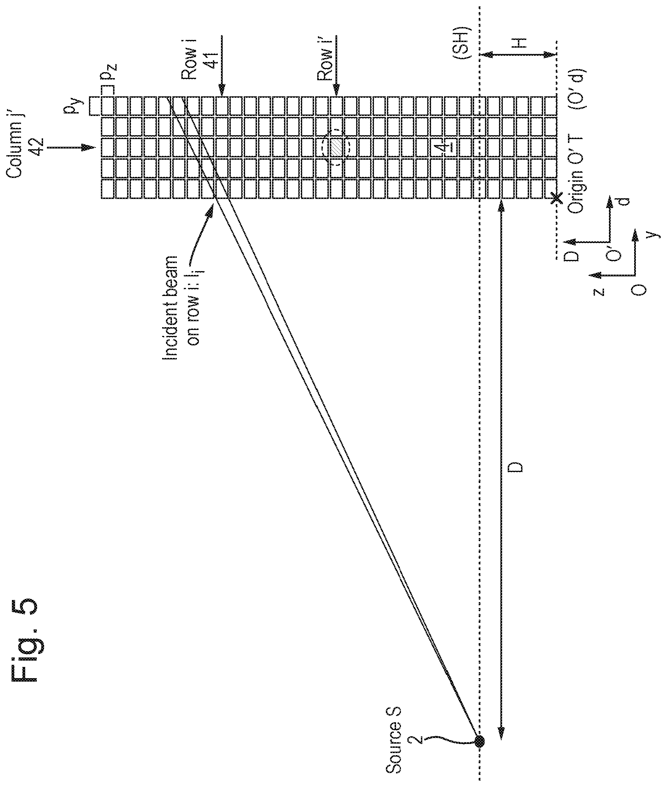

As illustrated in Figure 5, each coefficient *Cᵢⁱ_{'j'}* depends on at least one of:
a distance D, between the radiation source 2 and the array 4 of detectors cells 5; and/or
a height H of the source 2 associated with a distance between a first line (e.g. (O'd)) parallel to a lower part of the array 4 and a second line (e.g. SH) parallel to the first line (e.g. (O'd)) and passing through the radiation source 2; and/or
a pitch p_{z} of the array 4 along a direction parallel to the longitudinal direction (O'D), and a distance p_{y} between the columns 42 of the array 4 along a direction parallel to the depth direction (O'd) of the cells 5.

Therefore, in cases where the location of the source 2 is modified or in cases where there are several sources 2, it is sufficient to modify the set of coefficients *Cᵢⁱ_{'j'}* to be able to generate a new inspection image, without the need of changing the position or the location of the detector cells with respect to the source(s).

It should thus be understood that modifying the set of coefficients *Cᵢⁱ_{'j'}* and determining at S2 the flux *Iᵢ* of the inspection radiation is producing the same result than re-orienting the detector cells towards the new location of the source or the new source. The array of detector cells may be referred to as self-aligning towards the source(s) in the present disclosure.

In theory, for each pair (H,D) illustrated in Figure 5, a three-dimension arrangement *Cᵢⁱ_{'j'}* could be calculated. However, this may be time-consuming if the calculations are made on the fly and/or this may be disk-space consuming if the calculations are made before determining the flux. Calculating a three-dimension arrangement *Cᵢⁱ_{'j'}* may be envisaged for a single view inspection system with well-known locations for the source and the detectors cells, but this would be too complicated for a multi-view inspection system.

We note that, although the contributions *Rᵢⁱ_{'j'}* form a three-dimension arrangement, the majority of the contributions are equal to zero. This is because if |*i^{'} - i*|. *p_{z}* > *T.* tan(*θᵢ*), a beam incident in row i does not cross a detector cell 5 located at (i',j'), regardless of the value of j'. Therefore *Rᵢⁱ_{'j'}*, is equal to zero. As illustrated in Figure 4, the signal in a cell (i',j') comes from a very small number of incident flux *Iᵢ*, and the three-dimensional arrangement of coefficients *Cᵢⁱ_{j'}*, has very few non null coefficients.

Therefore, the matrix Mₖᵢ of (Eq. 3) has only non-null coefficients in the neighbourhood of the diagonal of the matrix, and the matrix may be inverted. This confirms that knowing the coefficients *Cᵢ^{k}_{'j'}* enables to determine the flux *Iᵢ*, hence enabling generation of an inspection image, based on the obtained data *Sᵢ^{N}_{'j'}* on each detector cell 5.

Therefore, determining the solution of the matrix equation Mₖᵢ of (Eq. 3) may comprise conditioning the matrix Mₖᵢ - such that the matrix Mₖᵢ does not have significant coefficients far from the diagonal - and inverting the matrix Mₖᵢ.

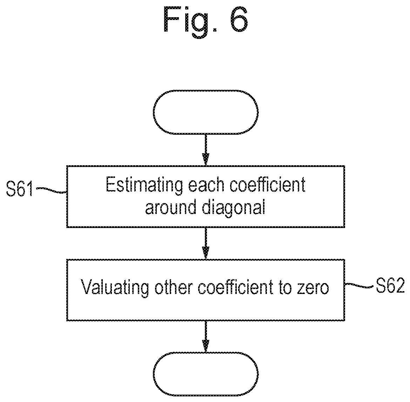

In some examples, as illustrated in Figure 6, conditioning the matrix Mₖᵢ may comprise estimating at S61 each coefficient *Cᵢⁱ_{'j'}*, which contributes to the terms of the matrix Mₖᵢ substantially around the diagonal of the matrix Mₖᵢ and valuating at S62 other coefficients of the matrix Mₖᵢ to a null value.

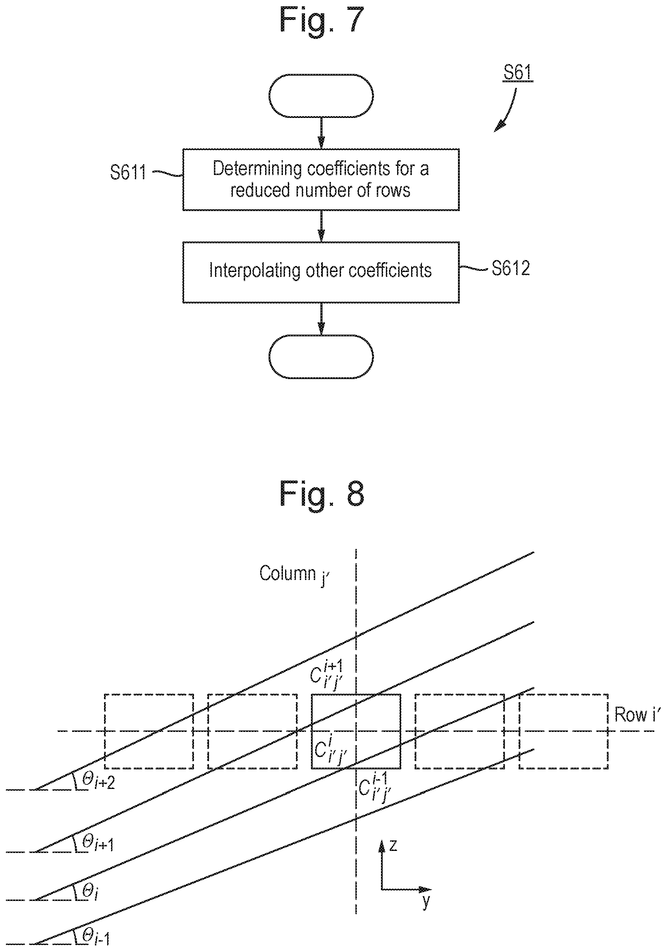

In some examples, as illustrated in Figure 7, estimating at S61 each coefficient *Cᵢⁱ_{'j'}*, substantially around the diagonal of the matrix Mₖᵢ may comprise, for D>>p_{z} and D>>T, and for a given pair (H,D) and a given column j':
determining, at S611, coefficients *Cᵢⁱ_{'j'}* for a reduced set of rows i; and
interpolating, at S612, other coefficients *Cᵢⁱ_{'j'}*, based on the determined coefficients *Cᵢⁱ_{'j'}*, for the reduced set of rows i.

As illustrated in Figure 8, determining at S611 the coefficients *Cⁱ_{i'j'}*, for the reduced set of rows i may use an integral which gives a deposit energy in the geometrical area corresponding to each of the coefficients to be determined. In Figure 8, the determining is based on the parameters H, D, z, y, p_{z}, p_{y}, i, i', j' of Figure 5 and the angles ***Θᵢ*** and ***Θ*_{*i*+1}** which are the angle bracketing the inspection radiation incident on row i, as well as the inspection radiation spectrum and the detector inspection radiation absorption coefficients.

In such an example, determining at S611 the coefficients *Cᵢⁱ_{'j'}* for the reduced set of rows i may comprise determining the contribution ${R}_{i ′ j ′}^{i}$ such that: ${R}_{i ′ j ′}^{i} = {\int }_{y = j ′ . {p}_{y}}^{y = \left(j′+1\right) . {p}_{y}} {\int }_{z = \left(i′.{p}_{z}-H\right)}^{z = \left(i′+1\right) . {p}_{z} - H} {\int }_{0}^{{E}_{M}} I \left(E, θ\right) . {μ}_{en} \left(E\right) . E . \frac{{e}^{- \frac{μ \left(E\right) . y}{cos \left(θ\right)}}}{{\left(D+y\right)}^{2}} . cos \left(θ\right) . u \left(cos\left({θ}_{i}\right)-cos\left(θ\right)\right) . u \left(cos\left(θ\right)-cos\left({θ}_{i + 1}\right)\right) . dE . dz . dy$ with:
*E*=a variable associated with the energy of the inspection radiation,
*E_{M}*=a maximum of the energy of the inspection radiation,
*θ*=an angular incidence of the inspection radiation on the array in the transmission plane (YOZ), with an y axis being parallel to the depth direction and a z axis being parallel to the longitudinal direction, such that: $tan \left(θ\right) = \left(\frac{z - H}{D + y}\right) ,$ $cos \left(θ\right) = \sqrt{\frac{1}{1 + {\left(\frac{z - H}{D + y}\right)}^{2}}} ,$
*θᵢ* =an angle of incidence of the inspection radiation on row i, such that: $tan \left({θ}_{i}\right) = \left(\frac{i . {p}_{z} - H}{D}\right) ,$
*I*(*E, θ*)=spectral and angular distributions of the inspection radiation,
*µₑₙ*(*E*)*. E=a* mean deposit energy in the detector cell for a photon of energy E, and
u=a step function.

Alternatively or additionally, if it is considered that the main contribution to coefficients C comes from the geometrical part (x, y, H, D, p_{z}, p_{y}) and if ${C}_{i ′ j ′}^{i}$ is interpreted as the fraction of the cells (i',j') which is crossed by beams incident on row i, determining at S611 the coefficients *Cᵢⁱ_{'j'}* for the reduced set of rows i may comprise determining the contribution ${R}_{i ′ j ′}^{i}$ such that: ${R}_{i ′ j ′}^{i} = {\int }_{y = j ′ . {p}_{y}}^{y = \left(j′+1\right) . {p}_{y}} {\int }_{z = \left(i′.{p}_{z}-H\right)}^{z = \left(i′+1\right) . {p}_{z} - H} \frac{1}{{\left(D+y\right)}^{2}} . cos \left(θ\left(x, y\right)\right) . u \left(cos\left({θ}_{i}\right)-cos\left(θ\left(x, y\right)\right)\right) . u \left(cos\left(θ\left(x, y\right)-cos\left({θ}_{i + 1}\right)\right)\right. dz . dy$ with:
*θ*=an angular incidence of the inspection radiation on the array in the transmission plane (YOZ), with an y axis being parallel to the depth direction and a z axis being parallel to the longitudinal direction, such that: $tan \left(θ\right) = \left(\frac{z - H}{D + y}\right) ,$ $cos \left(θ\right) = \sqrt{\frac{1}{1 + {\left(\frac{z - H}{D + y}\right)}^{2}}} ,$
*θᵢ* =an angle of incidence of the inspection radiation on row i, such that: $tan \left({θ}_{i}\right) = \left(\frac{i . {p}_{z} - H}{D}\right) ,$ and
an x axis being perpendicular to both the depth direction and the longitudinal direction.

Alternatively or additionally, determining at S611 the coefficients *Cᵢⁱ_{'j'}* for the reduced set of rows i may comprise using a Monte-Carlo method configured to calculate:
angular and spectral distributions of the inspection radiation 1, and/or
a simulation configured to estimate an energy deposit in the detector cell (i',j').

We note that an error on the coefficients C can only smooth the results of the calculations, because the coefficients are always positives. Therefore, alternatively or additionally, the coefficients can be adjusted by finding a set of coefficients which give the sharpest edges in the resulting inspection images. In such a case, determining at S611 the coefficients *Cᵢⁱ_{'j'}* for the reduced set of rows i may comprise:
determining initial coefficients *Cᵢⁱ_{'j'}* and generating an image *I^{c}* of the cargo, based on the determined initial coefficients *Cᵢⁱ_{'j'}*;
generating an image *I^{a}* of the cargo, based on initial adjusted coefficients *Cᵢⁱ_{'j'}* corresponding to adjusted determined initial coefficients *Cᵢⁱ_{'j'}*; and
determining final adjusted coefficients *Cᵢⁱ_{'j'}* minimizing a criterion such that: ${\sum }_{images} {\sum }_{i} \left({\left({I}_{i}^{a}-{I}_{i}^{c}\right)}^{2}+\frac{m}{{\left(∇ {I}^{a}\right)}_{i}^{2}}\right)$
with V is a gradient operator, and m a positive parameter.

In such cases, the signal data *S_{i'j'}* may be associated with cargo with sharp edges.

In some examples, interpolating, at S612, the other coefficients *Cᵢⁱ_{'j'}*, based on the coefficients *Cᵢⁱ_{'j'}* determined at S611 for the reduced set of rows i, may be performed as follows.

The interpolating performed at S612 may be made much easier using several properties as described below.

The interpolating performed at S612 may use the property of the typical distances in the inspection system. The distance D between the source and the array is of several meters (typically seven to fifteen meters), while the pitch p_{z} is of a few millimeters and the total thickness T of the array is of a few centimeters.

This property has three main consequences which can be explained below.

The first consequence is that the variation of C according the index i and i' is very slow.

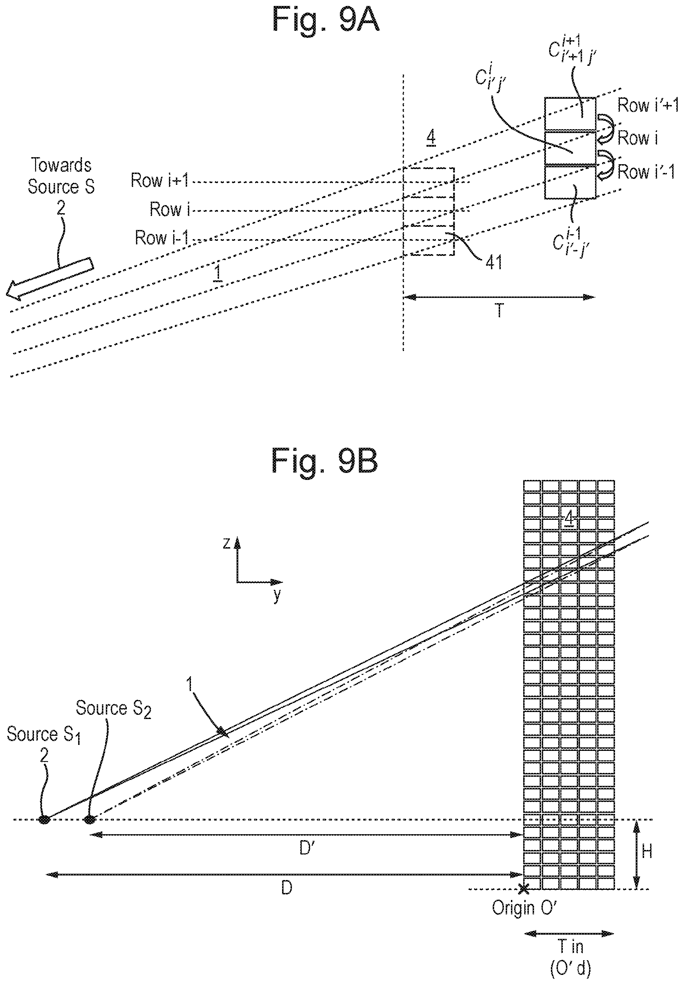

For given geometric parameters H and D, the value of ${C}_{i ′ j ′}^{i} \left(H, D\right)$ and ${C}_{i ′ ∓ 1 j ′}^{i ∓ 1} \left(H, D\right)$ are very close to each other, because as illustrated in Figure 9A, the beams of inspection radiation 1 are substantially parallel between two adjacent rows 41.

For a given column j' and for a given entrance row i, the indexes i' for which the C are not null is very limited (a few units at most). On the right-hand detectors cells of Figure 9A, the number of non-null coefficients is two. This number depends slowly on i, and this number is equal to one for the row in front of the source 2.

For a given source (H and D given), the quasi-parallel nature of the beams at the level of the detector cells shows that the values of ${C}_{i ′ j ′}^{i}$ and ${C}_{i ′ ∓ 1 j ′}^{i ∓ 1}$ are very close.

Therefore, in some examples the other coefficients *Cᵢⁱ_{'j'}* may be interpolated based on the coefficients *Cᵢⁱ_{'j'}* determined at S611 for the reduced set *iₚ* (p= 1, 2, Pₘₐₓ) of rows i, such that: ${C}_{i ′ j ′}^{i} \approx {C}_{i ′ - \left(i-{i}_{p}\right) j ′}^{{i}_{p}} + \frac{\left({C}_{i ′ - \left(i-{i}_{p + 1}\right) j ′}^{{i}_{p} + 1}-{C}_{i ′ - \left(i-{i}_{p}\right) j ′}^{{i}_{p}}\right)}{\left({i}_{p + 1}-{i}_{p}\right)} . \left(i-{i}_{p}\right)$
with *iₚ* ≤ *i* ≤ *i*_{*p*+1}, and
with p and Pₘₐₓ being positive integers.

As for each (i, j') the number of non-null C is at most of a few units, the number of calculations for the given H and D is dramatically reduced, e.g. for an array of one thousand rows, the number of calculations may be reduced from one million to less than one thousand.

The second consequence is that, due to the large value of D, the variation of coefficient ${C}_{i ′ j ′}^{i} \left(H, D\right)$ on D is very slow for a given H, as depicted in Figure 9B. Figure 9B illustrates the relatively limited dependency of coefficients C on D. The typical distance between the source 2 and the array 4 being more than seven meters, the coefficients C are varying slowly in D. The inspection radiation 1 from source S1 and source S2 are intercepting the array 4 in a very similar way (note that Figure 9B is not to scale).

The coefficients C may thus be calculated for a reduced set of m values for D, e.g. values (D₁, D₂, ...., D*ₘ*), and for the other values of D between the reduced set of values, the coefficients C can be deduced by interpolation.

Therefore, alternatively or additionally, for a displacement of the radiation source 2 along the direction parallel to the depth direction (O'd), the coefficients may be such that: ${C}_{i ′ j ′}^{i} \left(H, D\right) \approx {C}_{i ′ j ′}^{i} \left(H, {D}_{n}\right) + \frac{{C}_{i ′ j ′}^{i} \left(H, {D}_{n + 1}\right) - {C}_{i ′ j ′}^{i} \left(H, {D}_{n}\right)}{\left({D}_{n + 1}-{D}_{n}\right)} . \left(D-{D}_{n}\right)$ with n and m being positive integers and *Dₙ* ≤ *D* ≤ *D*_{*n*+1}.

The third consequence of the distances in the inspection system is better understood in combination with a property of periodicity as explained below.

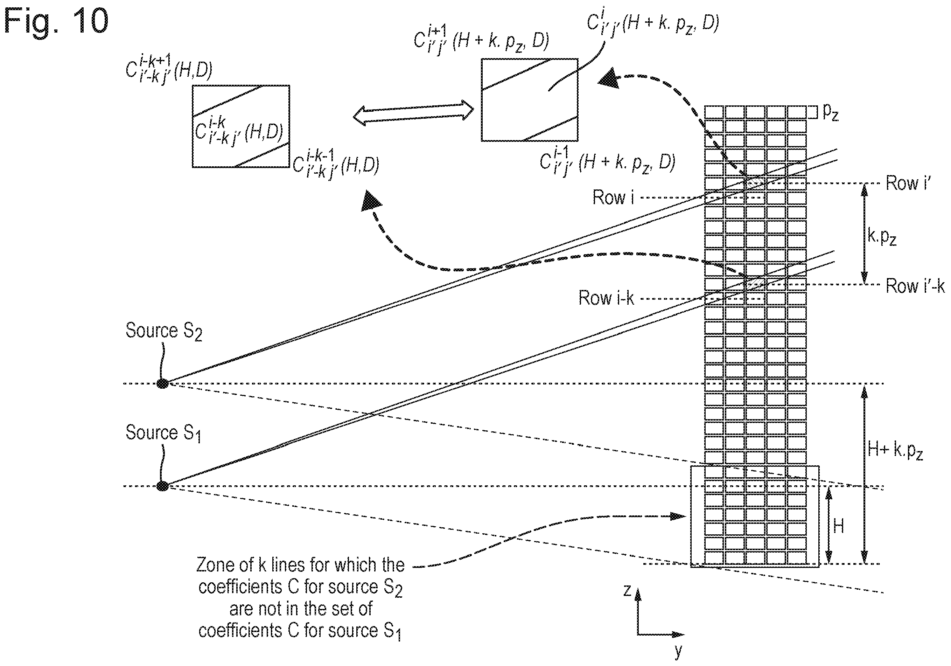

As illustrated in Figure 10, a periodicity of the coefficients C according to the parameter H is an important property which demonstrates the possibility of reducing the number of calculations of the coefficients C.

For example, as illustrated in Figure 10, if the radiation source 2 is displaced in the (OZ) direction by a distance equal to the pitch p_{z} in the (O'D) direction, the detector cell (i',j') plays, in the new position, the same role for the incident flux on line i, as the detector cell (i'-1,j') was playing for the incident flux on line i-1 before the displacement of the source 2.

The only exception to this rule is the side effect for the row at the extremity of the array opposite the displacement. For example, if the source 2 is displaced of a distance p_{z} upwards in the direction (OZ), for i=1, i-1 is 0 and then the coefficients of the first line *C*₁¹ *_{j'}*(*H +p_{z}, D)* cannot be found in the set of coefficient *Cᵢⁱ_{'j'}*(*H, D).* The same occurs for the upper line when the displacement is downwards. These remarks can be extended for larger displacements, multiple of *p_{z}*:
Therefore, alternatively or additionally, for a displacement of the radiation source 2 by k rows of pitch p_{z} along the direction parallel to the longitudinal direction (O'D), the coefficients may be such that: ${C}_{i ′ j ′}^{i} \left(H\pm k.{p}_{z},D\right) = {C}_{i ′ ∓ k j ′}^{i ∓ k} \left(H, D\right)$
with k being a positive integer,
except for the coefficients corresponding to the first k lines of the array for a positive displacement of the radiation source, or except for coefficients corresponding to the last k lines of the array for a negative displacement of the radiation source.

Although H and D are continuous parameters, if the side effects on the extreme rows are ignored, the above-described periodicity shows that knowing *Cᵢⁱ_{'j'}*(*H, D)* for values of H in an interval of width p_{z} is enough, because the other values of C may be deduced using the periodicity in the (O'D) direction.

Coming back to the third consequence of the distances in the inspection system, the distances in the inspection system are such that the variation of *Cᵢⁱ_{'j'}*(*H, D)* remains very small when H covers only such a short interval.

We thus note that knowing *Cᵢⁱ_{'j'}*(*H, D)* for the value of H in the center of a row (H=(k+1/2)p_{z}) or at the extremity (k.p_{z}) enables determining the C by interpolation for any values of H in the interval, and therefore for any value of H along the column - if the above described side effects are ignored.

Therefore, alternatively or additionally, for H∈[(k-1/2).p_{z},(k+1/2).p_{z}], with k being a positive integer, the other coefficients *Cᵢⁱ_{'j'}* may be interpolated based on the coefficients *Cᵢⁱ_{'j'}* determined at S611 for the reduced set of rows i, such that: ${C}_{i ′ j ′}^{i} \left(H, D\right) \approx {C}_{i ′ j ′}^{i} \left(\left(k-\frac{1}{2}\right).{p}_{z},D\right) + \frac{{C}_{i ′ - 1 j ′}^{i - 1} \left(\left(k-\frac{1}{2}\right).{p}_{z},D\right) - {C}_{i ′ j ′}^{i} \left(\left(k-\frac{1}{2}\right).{p}_{z},D\right)}{{p}_{z}} . \left(H-{p}_{z}\right) .$

The developments above explain examples where the detector cells 5 has a linear response as a function of the flux input.

Alternatively or additionally, for example in cases where the detector cells 5 do not have a linear response as a function of the flux input - but the approach explained below also applies to detector cells having a linear response - , the function F may be the conditional probability of S given I and R, such that: $F \left(I, R\right) = P \left(S\left|I, R\right.\right) ,$

In cases where the signal data and the contribution arrangement are normalized, the function F may be the conditional probability of such that: ${F}^{N} \left(I, C\right) = P \left({S}^{N}\left|I, C\right.\right) ,$

In cases where the function *F* is the conditional probability of *S* given *I* and *R*, determining at S2 the flux *Iᵢ* of the inspection radiation incident on row i, for each row i such that 1≤i≤L, may comprise maximizing the probability *P*(*S*|*I, R*) or the probability *P*(*S^{N}*|*I, C*) by maximum likelihood estimation and/or by log-likelihood estimation.

### Modifications and variations

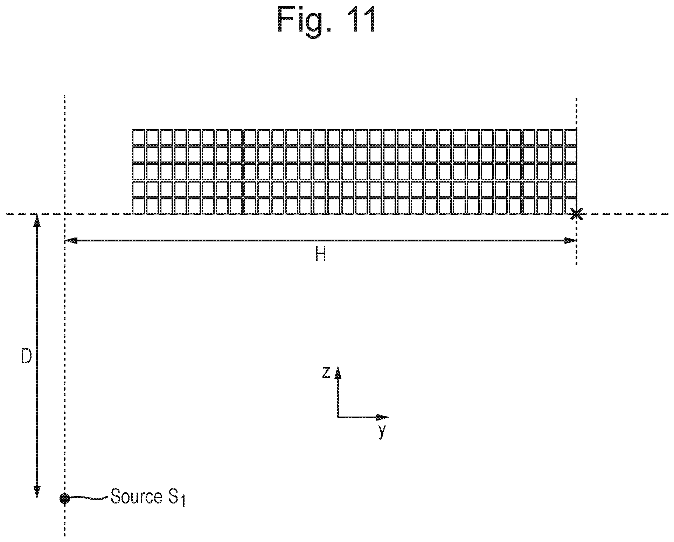

Inspection systems usually have a boom having a vertical part and a horizontal part, and each part may comprise at least one array according to the disclosure. The developments above explain methods and systems for a vertical array. As illustrated in Figure 11, coefficients of a horizontal array may be calculated in a similar way by choosing the right values for H and D, e.g. by swapping the vertical and the horizontal coordinate (Y and Z) for H and D. The described calculations are the same if D is chosen as the vertical distance between the source and the entrance face of the array and H is chosen as the horizontal distance between the source and the opposite end of the detectors line.

In the developments above, a distance p_{y} between the columns of the array in the direction parallel to the depth direction (O'd) of the array is a constant. However, for an array with a constant distance p_{y}, the first columns partially filter the inspection radiation and the flux incident on the last column is smaller. Hence, the last columns generally generate less signal.

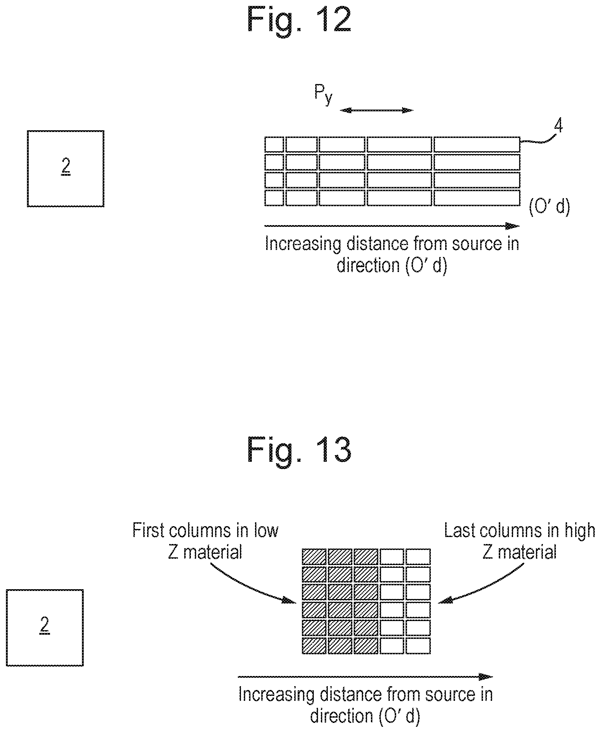

Therefore, alternatively or additionally, as illustrated in Figure 12, a distance p_{y} between the columns of the array in the direction parallel to the depth direction of the array may vary along the direction parallel to the depth direction of the array, preferably the distance p_{y} increases with an increasing distance from the radiation source. The array of Figure 12 allows the signal to be more homogeneously distributed along the columns. With a non-constant pitch configuration, the thicknesses of the cells can be chosen such as the full-scale signals (without object in the inspection radiation) are approximately equal on each column. The above developments for the calculation of the coefficients C remain valid and the equations remain the same with just slight modifications (e.g. limits of the integral).

The number of columns in the plurality λ is such that: $2 \leq λ .$

Preferably the number of columns in the plurality λ may be such that: $2 \leq λ \leq 10 , such as 3 \leq λ \leq 8 .$

In the above development a material of the detector cells may be identical for all of the detector cells of the array. In some embodiments, a material of at least some of the detector cells may be different from the material of at least some other detector cells of the array. As illustrated in Figure 13, some columns closer to the radiation source may be made of a lower atomic number material, and some columns further from the radiation source are made of higher atomic number material.

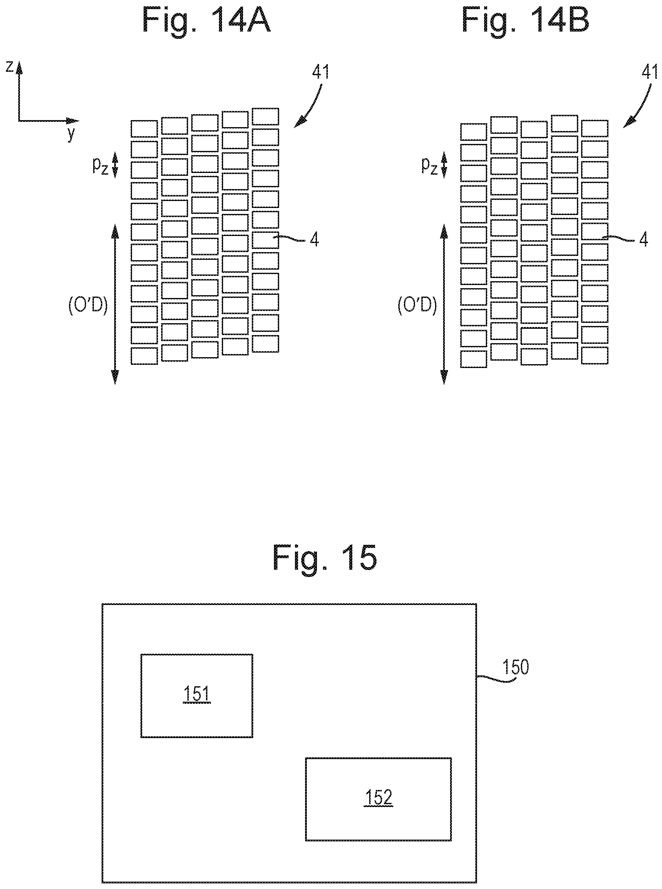

As illustrated in Figures 14A and 14B, each row may be shifted, with respect to an adjacent row in the array in the direction parallel to the longitudinal direction (O'D) of the array, e.g. by half a pitch p_{z} of the rows of the array in the direction parallel to the longitudinal direction (O'D) of the array in the example of Figure 14B, but other shifts are envisaged, as illustrated in Figure 14A, such as a shift of p_{z}/λ. As illustrated in Figure 14A, the shift may be constantly positive (or constantly negative would also be envisaged) between two consecutive columns of the array, for the whole array. As illustrated in Figure 14B, the half pitch p_{z} shift may alternate between a positive shift and a negative shift between two consecutive columns of the array. Embodiments according to Figures 14A and 14B enhance the spatial resolution in the longitudinal direction (O'D), by splitting the entrance flux *Iᵢ* in two subpixels and by calculating the corresponding set of coefficient C.

The present disclosure may be applied to an inspection system comprising a plurality of radiation sources for a single array, such as a multiview inspection system and/or an inspection system for inspection of bilevel vehicles and/or an inspection system comprising a source configured to move with respect to the array.

As illustrated in Figure 15, the present disclosure also concerns an apparatus 150 comprising:
a processor 151, and
a memory 152 storing instructions which, when executed by the processor 151, enable the apparatus 150 to perform the method of any of any aspects of the disclosure.

The inspection system (e.g. apparatus) according to the disclosure may comprise a plurality of arrays according to the disclosure, e.g. the plurality of arrays being adjacent to each other in the direction of scan of the cargo.

The inspection radiation may be any type of ionizing radiation, such as X-ray, gamma rays, neutrons as non-limiting examples.

The present disclosure also concerns a computer program or a computer program product comprising instructions which, when executed by a processor, enable the processor to perform the method of any of any aspects of the disclosure.

## Claims

1. A method (100) for determining a flux of inspection radiation,
wherein the inspection radiation is emitted by a radiation source and transmitted through cargo to inspect substantially in a transmission plane (YOZ),
wherein the flux of inspection radiation is incident, after transmission through the cargo, on at least one array of detector cells extending in a plane substantially parallel to the transmission plane (YOZ), the array having a depth direction, and a longitudinal direction substantially perpendicular to the depth direction,
the detector cells being configured in a first plurality L forming substantially rows of the array, each row of detector cells extending substantially along a direction parallel to the depth direction of the array,
the detector cells being further configured in a second plurality λ forming substantially at least two columns of the array, each column of detector cells extending substantially along a direction parallel to the longitudinal direction of the array,
the method comprising:
obtaining (S1) signal data *S_{i'j'}* associated with each detector cell of the array, each detector cell being located in (i',j') at an intersection of a column j' and a row i' of the array, the obtained signal data S for the array of detector cells being such that: $S = F \left(I, R\right)$
with *I* being a flux assembly corresponding to the flux of the inspection radiation incident on the rows of the array,
*R* being a contribution arrangement of coefficients ${R}_{i ′ j ′}^{i}$ for the array of detector cells, representing a contribution of a beam of the inspection radiation, incident on row i such that 1≤i≤L, to the signal data *S_{i'j'}* of the detector cell located in (i',j') incident on the rows i of the array, and
*F* being a known function of *I* and *R*; and
determining (S2) the flux *Iᵢ* of the inspection radiation incident on row i, for each row i such that 1≤i≤L, based on the obtained signal data *S_{i'j'}* and the coefficient ${R}_{i ′ j ′}^{i}$ for each detector cell located in (i',j') at the intersection of the column j' and the row i' of the array.

2. The method (100) of claim 1, further comprising normalizing (S12) the obtained signal data S, such that: ${S}_{i ′ j ′}^{N} = \frac{{S}_{i ′ j ′}}{{S}_{i ′ j ′}^{0}}$
with ${S}_{i ′ j ′}^{0}$ being a signal obtained when no object is placed in the irradiation radiation; and
further comprising normalizing the contribution arrangement R, such that: ${C}_{i ′ j ′}^{i} = \frac{{R}_{i ′ j ′}^{i}}{{\sum }_{k = 1}^{L} {R}_{i ′ j ′}^{k}}$
such that: ${S}^{N} = {F}^{N} \left(I, C\right)$
with *F^{N}* a known function of *I* and *C*.

3. The method (100) of claim 1 or claim 2, wherein the function *F* is the conditional probability of s given *I* and *R*, such that: $F \left(I, R\right) = P \left(S\left|I, R\right.\right) ,$
optionally, when the method further comprises normalizing the obtained signal data *S*, such that: ${S}_{i ′ j ′}^{N} = \frac{{S}_{i ′ j ′}}{{S}_{i ′ j ′}^{0}}$
with ${S}_{i ′ j ′}^{0}$ being a signal obtained when no object is placed in the irradiation radiation; and
further comprises normalizing the contribution arrangement *R*, such that: ${C}_{i ′ j ′}^{i} = \frac{{R}_{i ′ j ′}^{i}}{{\sum }_{k = 1}^{L} {R}_{i ′ j ′}^{k}}$
such that: ${S}^{N} = {F}^{N} \left(I, C\right)$ with *F^{N}* a known function of *I* and *C*,
wherein the function *F* is the conditional probability of such that: ${F}^{N} \left(I, C\right) = P \left({S}^{N}\left|I, C\right.\right) ,$
optionally wherein determining the flux *Iᵢ* of the inspection radiation incident on row i, for each row i such that 1≤i≤L, comprises maximizing the probability *P*(*S*|*I, R*) or the probability *P*(*S^{N}*|*I, C*) by maximum likelihood estimation and/or by log-likelihood estimation.

4. The method (100) of claim 1 or claim 2, wherein the known function *F* is a linear function such that: ${S}_{i ′ j ′} = {\sum }_{i = 1}^{L} {R}_{i ′ j ′}^{i} {I}_{i}$
with *Iᵢ* the flux of the inspection radiation incident on row i, and
*Rᵢⁱ_{'j'}* representing a contribution of a beam of the inspection radiation, incident on row i, to the signal data *S_{i'j'}* of the detector cell located in (i',j'),
optionally, when the method further comprises normalizing the obtained signal data S, such that: ${S}_{i ′ j ′}^{N} = \frac{{S}_{i ′ j ′}}{{S}_{i ′ j ′}^{0}}$
with ${S}_{i ′ j ′}^{0}$ being a signal obtained when no object is placed in the irradiation radiation; and
further comprises normalizing the contribution arrangement *R*, such that: ${C}_{i ′ j ′}^{i} = \frac{{R}_{i ′ j ′}^{i}}{{\sum }_{k = 1}^{L} {R}_{i ′ j ′}^{k}}$
such that: ${S}^{N} = {F}^{N} \left(I, C\right)$ with *F^{N}* a known function of *I* and *C*,
wherein normalizing the obtained signal data ${S}_{i ′ j ′}^{N}$ for each detector cell being located in (i',j') is such that: ${S}_{i ′ j ′}^{N} = \frac{{S}_{i ′ j ′}}{{S}_{i ′ j ′}^{0}} = \frac{{S}_{i ′ j ′}}{{\sum }_{k = 1}^{L} {R}_{i ′ j ′}^{k} {I}_{k}^{0}} = \frac{{\sum }_{i = 1}^{L} {R}_{i ′ j ′}^{i} {I}_{i}}{{\sum }_{k = 1}^{L} {R}_{i ′ j ′}^{k} {I}_{k}^{0}} = {\sum }_{i} \left(\frac{{R}_{i ′ j ′}^{i} {I}_{i}}{{\sum }_{k = 1}^{L} {R}_{i ′ j ′}^{k}}\right) = {\sum }_{i} {C}_{i ′ j ′}^{i} {I}_{i}$
with ${S}_{i ′ j ′}^{N} ∈ \left[0, 1\right]$,
with ${S}_{i ′ j ′}^{0} = {\sum }_{i = 1}^{L} {R}_{i ′ j ′}^{i} {I}_{i}^{0}$ with *Iᵢ*⁰ being the flux of full-scale inspection radiation obtained when no object is placed in the irradiation radiation, incident on row i,
with *Iᵢ*⁰ being chosen equal to 1 for each row i such that 1≤i≤L, which implies the *Iᵢ* to have values in [0,1],
with each coefficient *Cᵢⁱ_{'j'}* being such that ${C}_{i ′ j ′}^{i} = \frac{{R}_{i ′ j ′}^{i}}{{\sum }_{k}^{L} {R}_{i ′ j ′}^{k}}$, and
with ${\sum }_{i} {C}_{i ′ j ′}^{i} = 1$; and
determining the flux *Iᵢ* of the inspection radiation incident on row i, for each row i such as 1≤i≤L, based on the normalized uniform signal data ${S}_{i ′ j ′}^{N}$ and the coefficient ${C}_{i ′ j ′}^{i}$ for each detector cell located in (i',j') at the intersection of the column j' and the row i' of the array,
optionally wherein determining the flux *Iᵢ* of the inspection radiation incident on row i, for each row i such that 1≤i≤L, comprises using a least squares regression to find a set of fluxes *Iᵢ* which minimizes a criterion Lₛ, such that: ${L}_{S} = {\sum }_{i ′ , j ′} {\left({S}_{i ′ j ′}^{N}-{\sum }_{i} {C}_{i ′ j ′}^{i} {I}_{i}\right)}^{2} .$

5. The method (100) of claim 4, wherein the set of fluxes *Iᵢ* which minimizes the criterion Lₛ is determined using a gradient minimalization technique, or
wherein the set of fluxes *Iᵢ* which minimizes the criterion Lₛ is determined by determining a solution of a matrix equation Mₖᵢ such that: $∀ k , {\sum }_{i ′ , j ′} {C}_{i ′ j ′}^{k} {S}_{i ′ j ′}^{N} = {\sum }_{i} \left({{{\sum }_{i ′ , j ′} {C}_{i ′ j ′}^{k} . {C}_{i ′ j ′}^{i}}_{︸}}_{{M}_{ki}}\right) . {I}_{i}$

6. The method of claim 5, wherein each coefficient *Cᵢⁱ_{'j'}* depends on at least one of:
a distance D, between the radiation source and the array of detectors cells; and/or
a height H of the source associated with a distance between a first line parallel to a lower part of the array and a second line parallel to the first line and passing through the radiation source; and/or
a pitch p_{z} of the array along a direction parallel to the longitudinal direction, and a distance p_{y} between the columns of the array along a direction parallel to the depth direction of the cells, and
wherein determining the solution of the matrix equation Mₖᵢ comprises conditioning the matrix Mₖᵢ such that the matrix Mₖᵢ does not have significant coefficients far from the diagonal of the matrix Mₖᵢ and inverting the matrix Mₖᵢ,
optionally wherein conditioning the matrix Mₖᵢ comprises estimating each coefficient *Cᵢⁱ_{'j'}* which contributes to the terms of the matrix Mₖᵢ substantially around the diagonal of the matrix Mₖᵢ and valuating other coefficients of the matrix Mₖᵢ to a null value,
optionally wherein estimating each coefficient *Cᵢⁱ_{'j'}* substantially around the diagonal of the matrix Mₖᵢ comprises, for D>>p_{z} and D>>T, and for a given pair (H,D) and a given column j':
determining coefficients *Cᵢⁱ_{'j'}* for a reduced set of rows i; and
interpolating other coefficients *Cᵢⁱ_{'j'},* based on the determined coefficients *Cᵢⁱ_{'j'}* for the reduced set of rows i.

7. The method (100) of claim 6, wherein the other coefficients *Cᵢ^{i,}_{j'}* are interpolated based on the determined coefficients *Cᵢ^{i,}ⱼ'* for the reduced *iₚ* set of rows i, such that: ${C}_{i ′ j ′}^{i} \approx {C}_{i ′ - \left(i-{i}_{p}\right) j ′}^{{i}_{p}} + \frac{\left({C}_{i ′ - \left(i-{i}_{p + 1}\right) j ′}^{{i}_{p} + 1}-{C}_{i ′ - \left(i-{i}_{p}\right) j ′}^{{i}_{p}}\right)}{\left({i}_{p + 1}-{i}_{p}\right)} . \left(i-{i}_{p}\right)$
with *iₚ* ≤ *i* ≤ *i*_{*p*+1}, and
with p being a positive integer, or
wherein, for H∈[(k-1/2).p_{z},(k+1/2).p_{z}], with k being a positive integer, the other coefficients *Cᵢⁱ_{'j'}* are interpolated based on the determined coefficients *Cᵢⁱ_{'j'}* for the reduced set of rows i, such that: ${C}_{i ′ j ′}^{i} \left(H, D\right) \approx {C}_{i ′ j ′}^{i} \left(\left(k-\frac{1}{2}\right).{p}_{z},D\right) + \frac{{C}_{i ′ - 1 j ′}^{i - 1} \left(\left(k-\frac{1}{2}\right).{p}_{z},D\right) - {C}_{i ′ j ′}^{i} \left(\left(k-\frac{1}{2}\right).{p}_{z},D\right)}{{p}_{z}} . \left(H-{p}_{z}\right) .$

8. The method (100) of any of claims 6 to 7, wherein, for a displacement of the radiation source by k rows of pitch p_{z} along the direction parallel to the longitudinal direction, the coefficients are such that: ${C}_{i ′ j ′}^{i} \left(H\pm k.{p}_{z},D\right) = {C}_{i ′ ∓ k j ′}^{i ∓ k} \left(H, D\right)$
with k being a positive integer,
except for the coefficients corresponding to the first k lines of the array for a positive displacement of the radiation source, or except for coefficients corresponding to the last k lines of the array for a negative displacement of the radiation source, or
wherein, for a displacement of the radiation source along the direction parallel to the depth direction, the coefficients are such that: ${C}_{i ′ j ′}^{i} \left(H, D\right) \approx {C}_{i ′ j ′}^{i} \left(H, {D}_{n}\right) + \frac{{C}_{i ′ j ′}^{i} \left(H, {D}_{n + 1}\right) - {C}_{i ′ j ′}^{i} \left(H, {D}_{n}\right)}{\left({D}_{n + 1}-{D}_{n}\right)} . \left(D-{D}_{n}\right)$
with n being a positive integer.

9. The method (100) of any of claims 6 to 8, wherein determining the coefficients *Cᵢ^{i,}_{j'}* for the reduced set of rows i comprises determining the contribution ${R}_{i ′ j ′}^{i}$ such that: ${R}_{i ′ j ′}^{i} = {\int }_{y = j ′ . {p}_{y}}^{y = \left(j′+1\right) . {p}_{y}} {\int }_{z = \left(i′.{p}_{z}-H\right)}^{z = \left(i′+1\right) . {p}_{z} - H} {\int }_{0}^{{E}_{M}} I \left(E, θ\right) . {μ}_{en} \left(E\right) . E . \frac{{e}^{- \frac{μ \left(E\right) . y}{cos \left(θ\right)}}}{{\left(D+y\right)}^{2}} . cos \left(θ\right) . u \left(cos\left({θ}_{i}\right)-cos\left(θ\right)\right) . u \left(cos\left(θ\right)-cos\left({θ}_{i + 1}\right)\right) . dE . dz . dy$ with:
*E*=a variable associated with the energy of the inspection radiation,
*E_{M}*=*a* maximum of the energy of the inspection radiation,
*θ*=an angular incidence of the inspection radiation on the array in the transmission plane (YOZ), with an y axis being parallel to the depth direction and a z axis being parallel to the longitudinal direction, such that: $tan \left(θ\right) = \left(\frac{z - H}{D + y}\right) ,$ $cos \left(θ\right) = \sqrt{\frac{1}{1 + {\left(\frac{z - H}{D + y}\right)}^{2}}} ,$
*θᵢ* =an angle of incidence of the inspection radiation on row i, such that: $tan \left({θ}_{i}\right) = \left(\frac{i . {p}_{z} - H}{D}\right) ,$
*I*(*E*, *θ*)=spectral and angular distributions of the inspection radiation,
*µₑₙ*(*E*). *E=a* mean deposit energy in the detector cell for a photon of energy E, and
*u*=a step function, or
wherein determining the coefficients *Cᵢⁱ_{'j'}* for the reduced set of rows i comprises determining the contribution ${R}_{i ′ j ′}^{i}$ such that: ${R}_{i ′ j ′}^{i} = {\int }_{y = j ′ . {p}_{y}}^{y = \left(j′+1\right) . {p}_{y}} {\int }_{z = \left(i′.{p}_{z}-H\right)}^{z = \left(i′+1\right) . {p}_{z} - H} \frac{1}{{\left(D+y\right)}^{2}} . cos \left(θ\left(x, y\right)\right) . u \left(cos\left({θ}_{i}\right)-cos\left(θ\left(x, y\right)\right)\right) . u \left(cos\left(θ\left(x, y\right)-cos\left({θ}_{i + 1}\right)\right)\right. dz . dy$ with:
*θ*=an angular incidence of the inspection radiation on the array in the transmission plane (YOZ), with an y axis being parallel to the depth direction and a z axis being parallel to the longitudinal direction, such that: $tan \left(θ\right) = \left(\frac{z - H}{D + y}\right) ,$ $cos \left(θ\right) = \sqrt{\frac{1}{1 + {\left(\frac{z - H}{D + y}\right)}^{2}}} ,$
*θᵢ* =an angle of incidence of the inspection radiation on row i, such that: $tan \left({θ}_{i}\right) = \left(\frac{i . {p}_{z} - H}{D}\right) ,$ and
an x axis being perpendicular to both the depth direction and the longitudinal direction, or
wherein determining the coefficients *Cᵢⁱ_{'j'}* for the reduced set of rows i comprises using a Monte-Carlo method configured to calculate:
angular and spectral distributions of the inspection radiation, and/or
a simulation configured to estimate an energy deposit in the detector cell (i',j').

10. The method (100) of any of claims 6 to 9, wherein determining the coefficients *Cᵢⁱ_{'j'}* for the reduced set of rows i comprises:
determining initial coefficients *Cᵢⁱ_{'j'}* and generating an image *I^{c}* of the cargo, based on the determined initial coefficients *Cᵢⁱ_{'j'}*;
generating an image *I^{a}* of the cargo, based on initial adjusted coefficients *Cᵢⁱ_{'j'}* corresponding to adjusted determined initial coefficients *Cᵢⁱ_{'j'}*; and
determining final adjusted coefficients *Cᵢⁱ_{'j'}* minimizing a criterion such that: ${\sum }_{images} {\sum }_{i} \left({\left({I}_{i}^{a}-{I}_{i}^{c}\right)}^{2}+\frac{m}{{\left(∇ {I}^{a}\right)}_{i}^{2}}\right)$
with V is a gradient operator, and m a positive parameter,
optionally wherein the signal data *S_{i'j'}* is associated with cargo with sharp edges.

11. The method (100) of any of claims 1 to 10, wherein
a distance p_{y} between the columns of the array in the direction parallel to the depth direction of the array is a constant, or
a distance p_{y} between the columns of the array in the direction parallel to the depth direction of the array varies along the direction parallel to the depth direction of the array, preferably wherein the distance p_{y} increases with an increasing distance from the radiation source, or
wherein:
a material of the detector cells is identical for all of the detector cells of the array, or
a material of at least some of the detector cells is different from the material of at least some other detector cells of the array,
optionally wherein:
some columns closer to the radiation source are made of a lower atomic number material, and
some columns further from the radiation source are made of higher atomic number material.

12. The method (100) of any of claims 1 to 11, wherein each row is shifted, with respect to an adjacent row in the array in the direction parallel to the longitudinal direction of the array,
optionally wherein:
the shift alternates between a positive shift and a negative shift between two consecutive columns of the array, or
the shift is constantly positive or constantly negative between two consecutive columns of the array, for the whole array.

13. The method (100) of any claims 1 to 12, further comprising generating an inspection image of the cargo, based on the determined flux *Iᵢ* of the inspection radiation incident on row i, for each row i such as 1≤i≤L, or
applied to an inspection system comprising a plurality of radiation sources for a single array, such as a multiview inspection system and/or an inspection system for inspection of bilevel vehicles and/or an inspection system comprising a source configured to move with respect to the array.

14. Apparatus (150) comprising:
a processor (151); and
a memory (152) storing instructions which, when executed by the processor, enable the apparatus to perform the method (100) of any of claims 1 to 13; or
comprising a plurality of arrays.

15. A computer program or a computer program product comprising instructions which, when executed by a processor, enable the processor to perform the method (100) of any of claims 1 to 13.

## Patentansprüche

1. Verfahren (100) zum Bestimmen eines Flusses von Inspektionsstrahlung,
wobei die Inspektionsstrahlung von einer Strahlungsquelle emittiert und durch Frachtgut transmittiert wird, um im Wesentlichen in einer Transmissionsebene (YOZ) zu inspizieren,
wobei der Fluss der Inspektionsstrahlung nach der Transmission durch das Frachtgut auf mindestens eine Anordnung von Detektorzellen auftrifft, die sich in einer Ebene im Wesentlichen parallel zur Transmissionsebene (YOZ) erstreckt, wobei die Anordnung eine Tiefenrichtung und eine Längsrichtung aufweist, die im Wesentlichen senkrecht zur Tiefenrichtung verläuft,
wobei die Detektorzellen in einer ersten Vielzahl L konfiguriert sind, die im Wesentlichen Reihen der Anordnung bilden, wobei sich jede Reihe von Detektorzellen im Wesentlichen entlang einer Richtung parallel zur Tiefenrichtung der Anordnung erstreckt,
wobei die Detektorzellen ferner in einer zweiten Vielzahl λ konfiguriert sind, die im Wesentlichen mindestens zwei Spalten der Anordnung bilden, wobei sich jede Spalte von Detektorzellen im Wesentlichen entlang einer Richtung parallel zur Längsrichtung der Anordnung erstreckt,
wobei das Verfahren Folgendes umfasst:
Erhalten von (S1) Signaldaten *S_{i'j'}*, die jeder Detektorzelle der Anordnung zugeordnet sind, wobei sich jede Detektorzelle in (i',j') an einem Schnittpunkt einer Spalte j' und einer Reihe i' der Anordnung befindet, wobei die erhaltenen Signaldaten S für die Anordnung von Detektorzellen derart sind, dass: $S = F \left(I, R\right)$
wo *I* eine Flussbaugruppe ist, die dem Fluss der auf die Reihen der Anordnung auftreffenden Inspektionsstrahlung entspricht,
*R* eine Beitragsstruktur der Koeffizienten ${R}_{i ′ j ′}^{i}$ für die Anordnung der Detektorzellen ist, die den Beitrag eines Bündels der Inspektionsstrahlung darstellt, das auf die Reihe i auftrifft, sodass 1≤i≤L gilt, zu den Signaldaten *S_{i'j'}* der Detektorzelle, die sich in (i',j') befindet, die auf die Reihen i der Anordnung auftrifft, und
*F* eine bekannte Funktion von *I* und *R* ist; und
Bestimmen (S2) des Flusses *Iᵢ* der Inspektionsstrahlung, die auf die Reihe i auftrifft, für jede Reihe i sodass 1≤i≤L, basierend auf den erhaltenen Signaldaten *S_{i'j'}* und dem Koeffizienten ${R}_{i ′ j ′}^{i}$ für jede Detektorzelle, die sich in (i',j') am Schnittpunkt der Spalte j' und der Reihe i' der Anordnung befindet.

2. Verfahren (100) nach Anspruch 1, ferner umfassend das Normalisieren (S12) der erhaltenen Signaldaten *S*, sodass: ${S}_{i ′ j ′}^{N} = \frac{{S}_{i ′ j ′}}{{S}_{i ′ j ′}^{0}}$
wo ${S}_{i ′ j ′}^{0}$ ein Signal ist, das erhalten wird, wenn kein Objekt in der Bestrahlungsstrahlung platziert ist; und
ferner umfassend das Normalisieren der Beitragsstruktur *R*, sodass: ${C}_{i ′ j ′}^{i} = \frac{{R}_{i ′ j ′}^{i}}{{\sum }_{k = 1}^{L} {R}_{i ′ j ′}^{k}}$
sodass: ${S}^{N} = {F}^{N} \left(I, C\right)$
wo *F^{N}* eine bekannte Funktion von *I* und *C* ist.

3. Verfahren (100) nach Anspruch 1 oder Anspruch 2, wobei die Funktion *F* die bedingte Wahrscheinlichkeit von *S* gegeben *I* und *R*, sodass: $F \left(I, R\right) = P \left(S\left|I, R\right.\right) ,$
optional, wenn das Verfahren ferner das Normalisieren der erhaltenen Signaldaten *S* umfasst, sodass: ${S}_{i ′ j ′}^{N} = \frac{{S}_{i ′ j ′}}{{S}_{i ′ j ′}^{0}}$
wo ${S}_{i ′ j ′}^{0}$ ein Signal ist, das erhalten wird, wenn kein Objekt in der Bestrahlungsstrahlung platziert ist; und
ferner das Normalisieren der Beitragsstruktur *R* umfasst, sodass: ${C}_{i ′ j ′}^{i} = \frac{{R}_{i ′ j ′}^{i}}{{\sum }_{k = 1}^{L} {R}_{i ′ j ′}^{k}}$
sodass: ${S}^{N} = {F}^{N} \left(I, C\right)$ wo *F^{N}* eine bekannte Funktion von *I* und *C* ist,
wobei die Funktion *F* die bedingte Wahrscheinlichkeit ist, sodass: ${F}^{N} \left(I, C\right) = P \left({S}^{N}\left|I, C\right.\right) ,$
optional wobei das Bestimmen des Flusses *Iᵢ* der Inspektionsstrahlung, die auf die Reihe i auftrifft, für jede Reihe i sodass 1≤i≤L, das Maximieren der Wahrscheinlichkeit *P*(*S*|*I, R*) oder der Wahrscheinlichkeit *P*(*S^{N}*|*I, C*) durch maximale Wahrscheinlichkeitsschätzung und/oder durch Log-Wahrscheinlichkeitsschätzung umfasst.

4. Verfahren (100) nach Anspruch 1 oder Anspruch 2, wobei die bekannte Funktion *F* eine lineare Funktion ist, sodass: ${S}_{i ′ j ′} = {\sum }_{i = 1}^{L} {R}_{i ′ j ′}^{i} {I}_{i}$
wo *Iᵢ* der Fluss der Inspektionsstrahlung ist, die auf die Reihe i auftrifft, und *Rᵢⁱ_{'j'}* einen Beitrag eines Bündels der Inspektionsstrahlung darstellt, das auf die Reihe i auftrifft, zu den Signaldaten *S_{i'j'}* der Detektorzelle, die sich in (i',j') befindet,
optional, wenn das Verfahren ferner das Normalisieren der erhaltenen Signaldaten *S* umfasst, sodass: ${S}_{i ′ j ′}^{N} = \frac{{S}_{i ′ j ′}}{{S}_{i ′ j ′}^{0}}$
wo ${S}_{i ′ j ′}^{0}$ ein Signal ist, das erhalten wird, wenn kein Objekt in der Bestrahlungsstrahlung platziert ist; und
ferner das Normalisieren der Beitragsstruktur *R* umfasst, sodass: ${C}_{i ′ j ′}^{i} = \frac{{R}_{i ′ j ′}^{i}}{{\sum }_{k = 1}^{L} {R}_{i ′ j ′}^{k}}$
sodass: ${S}^{N} = {F}^{N} \left(I, C\right)$ wo *F^{N}* eine bekannte Funktion von *I* und *C* ist,
wobei das Normalisieren der erhaltenen Signaldaten ${S}_{i ′ j ′}^{N}$ für jede Detektorzelle, die sich in (i',j') befindet, derart ist, dass: ${S}_{i ′ j ′}^{N} = \frac{{S}_{i ′ j ′}}{{S}_{i ′ j ′}^{0}} = \frac{{S}_{i ′ j ′}}{{\sum }_{k = 1}^{L} {R}_{i ′ j ′}^{k} {I}_{k}^{0}} = \frac{{\sum }_{i = 1}^{L} {R}_{i ′ j ′}^{i} {I}_{i}}{{\sum }_{k = 1}^{L} {R}_{i ′ j ′}^{k} {I}_{k}^{0}} = {\sum }_{i} \left(\frac{{R}_{i ′ j ′}^{i} {I}_{i}}{{\sum }_{k = 1}^{L} {R}_{i ′ j ′}^{k}}\right) = {\sum }_{i} {C}_{i ′ j ′}^{i} {I}_{i}$
wo ${S}_{i ′ j ′}^{N} ∈ \left[0, 1\right]$,
wo ${S}_{i ′ j ′}^{0} = {\sum }_{i = 1}^{L} {R}_{i ′ j ′}^{i} {I}_{i}^{0}$ wo *Iᵢ*⁰ der Fluss der Vollskala-Inspektionsstrahlung ist, der erhalten wird, wenn kein Objekt in der Bestrahlungsstrahlung platziert ist, das auf die Reihe i auftrifft,
wo *Iᵢ*⁰ für jede Reihe i gleich 1 gewählt wird, sodass 1≤i≤L, was bedeutet, dass *Iᵢ* Werte in [0,1] aufweist,
wo jeder Koeffizient *Cᵢⁱ_{'j'}* so ist, dass ${C}_{i ′ j ′}^{i} = \frac{{R}_{i ′ j ′}^{i}}{{\sum }_{k}^{L} {R}_{i ′ j ′}^{k}}$, und
wo ${\sum }_{i} {C}_{i ′ j ′}^{i} = 1$; und
Bestimmen des Flusses *Iᵢ* der Inspektionsstrahlung, die auf die Reihe i auftrifft, für jede Reihe i, wie z. B. 1≤i≤L, basierend auf den normalisierten einheitlichen Signaldaten ${S}_{i ′ j ′}^{N}$ und dem Koeffizienten ${C}_{i ′ j ′}^{i}$ für jede Detektorzelle, die sich in (i',j') am Schnittpunkt der Spalte j' und der Reihe i' der Anordnung befindet,
optional wobei das Bestimmen des Flusses *Iᵢ* der Inspektionsstrahlung, die auf die Reihe i auftrifft, für jede Reihe i, sodass 1≤i≤L, das Verwenden einer Regression der kleinsten Quadrate umfasst, um einen Satz von Flüssen *Iᵢ* zu finden, der ein Kriterium Lₛ minimiert, sodass: ${L}_{S} = {\sum }_{i ′ , j ′} {\left({S}_{i ′ j ′}^{N}-{\sum }_{i} {C}_{i ′ j ′}^{i} {I}_{i}\right)}^{2} .$

5. Verfahren (100) nach Anspruch 4, wobei der Satz von Flüssen *Iᵢ*, der das Kriterium Lₛ minimiert, unter Verwendung einer Gradientenminimierungstechnik bestimmt wird, oder
wobei der Satz von Flüssen *Iᵢ*, der das Kriterium Lₛ minimiert, durch Bestimmen einer Lösung einer Matrixgleichung Mₖᵢ bestimmt wird, sodass: $∀ k , {\sum }_{i ′ , j ′} {C}_{i ′ j ′}^{k} {S}_{i ′ j ′}^{N} = {\sum }_{i} \left({{{\sum }_{i ′ , j ′} {C}_{i ′ j ′}^{k} . {C}_{i ′ j ′}^{i}}_{︸}}_{{M}_{ki}}\right) . {I}_{i}$

6. Verfahren nach Anspruch 5, wobei jeder Koeffizient *Cᵢⁱ_{'j'}* von mindestens einem von Folgendem abhängt:
einem Abstand D zwischen der Strahlungsquelle und der Anordnung von Detektorzellen; und/oder
einer Höhe H der Quelle, die einem Abstand zwischen einer ersten Linie, die parallel zu einem unteren Teil der Anordnung verläuft, und einer zweiten Linie, die parallel zur ersten Linie verläuft und durch die Strahlungsquelle hindurchgeht, zugeordnet ist; und/oder
einem Schritt p_{z} der Anordnung entlang einer Richtung parallel zur Längsrichtung und einen Abstand p_{y} zwischen den Spalten der Anordnung entlang einer Richtung parallel zur Tiefenrichtung der Zellen, und
wobei das Bestimmen der Lösung der Matrixgleichung Mₖᵢ das Konditionieren der Matrix Mₖᵢ, sodass die Matrix Mₖᵢ keine signifikanten Koeffizienten weit entfernt von der Diagonalen der Matrix Mₖᵢ aufweist, und das Invertieren der Matrix Mₖᵢ umfasst,
optional wobei das Konditionieren der Matrix Mₖᵢ das Schätzen jedes Koeffizienten *Cᵢⁱ_{'j'}*, der zu den Termen der Matrix Mₖᵢ im Wesentlichen um die Diagonale der Matrix Mₖᵢ herum beiträgt, und das Setzen anderer Koeffizienten der Matrix Mₖᵢ auf den Wert Null umfasst,
optional wobei das Schätzen jedes Koeffizienten *Cᵢⁱ_{'j'}* im Wesentlichen um die Diagonale der Matrix Mₖᵢ für D>>p_{z} und D>>T und für ein gegebenes Paar (H,D) sowie eine gegebene Spalte j' Folgendes umfasst:
Bestimmen von Koeffizienten *Cᵢⁱ_{'j'}* für einen reduzierten Satz von Reihen i; und
Interpolieren weiterer Koeffizienten *Cᵢⁱ_{'j'}* basierend auf den bestimmten Koeffizienten *Cᵢⁱ_{'j'}* für den reduzierten Satz von Reihen i.

7. Verfahren (100) nach Anspruch 6, wobei die übrigen Koeffizienten *Cᵢⁱ_{'j'}* basierend auf den bestimmten Koeffizienten *Cᵢⁱ_{'j'}* für den reduzierten *iₚ* -Satz von Reihen i interpoliert werden, sodass: ${C}_{i ′ j ′}^{i} \approx {C}_{i ′ - \left(i-{i}_{p}\right) j ′}^{{i}_{p}} + \frac{\left({C}_{i ′ - \left(i-{i}_{p + 1}\right) j ′}^{{i}_{p} + 1}-{C}_{i ′ - \left(i-{i}_{p}\right) j ′}^{{i}_{p}}\right)}{\left({i}_{p + 1}-{i}_{p}\right)} . \left(i-{i}_{p}\right)$
wo *iₚ* ≤ *i* ≤ *i*_{*p*+1}, und
wo p eine positive ganze Zahl ist, oder
wobei, für H∈[(k-1/2).p_{z},(k+1/2).p_{z}], wo k eine positive ganze Zahl ist, die übrigen Koeffizienten *Cᵢⁱ_{'j'}* basierend auf den bestimmten Koeffizienten *Cᵢⁱ_{'j'}* für den reduzierten Satz von Reihen i interpoliert werden, sodass: ${C}_{i ′ j ′}^{i} \left(H, D\right) \approx {C}_{i ′ j ′}^{i} \left(\left(k-\frac{1}{2}\right).{p}_{z},D\right) + \frac{{C}_{i ′ - 1 j ′}^{i - 1} \left(\left(k-\frac{1}{2}\right).{p}_{z},D\right) - {C}_{i ′ j ′}^{i} \left(\left(k-\frac{1}{2}\right).{p}_{z},D\right)}{{p}_{z}} . \left(H-{p}_{z}\right) .$

8. Verfahren (100) nach einem der Ansprüche 6 bis 7, wobei bei einer Verschiebung der Strahlungsquelle um k Reihen des Schrittes p_{z} entlang der zur Längsrichtung parallelen Richtung die Koeffizienten derart sind, dass: ${C}_{i ′ j ′}^{i} \left(H\pm k.{p}_{z},D\right) = {C}_{i ′ ∓ k j ′}^{i ∓ k} \left(H, D\right)$
wo k eine positive ganze Zahl ist,
mit Ausnahme der Koeffizienten, die den ersten k Reihen der Anordnung für eine positive Verschiebung der Strahlungsquelle entsprechen, oder mit Ausnahme der Koeffizienten, die den letzten k Reihen der Anordnung für eine negative Verschiebung der Strahlungsquelle entsprechen, oder
wobei, bei einer Verschiebung der Strahlungsquelle entlang der zur Tiefenrichtung parallelen Richtung die Koeffizienten so sind, dass: ${C}_{i ′ j ′}^{i} \left(H, D\right) \approx {C}_{i ′ j ′}^{i} \left(H, {D}_{n}\right) + \frac{{C}_{i ′ j ′}^{i} \left(H, {D}_{n + 1}\right) - {C}_{i ′ j ′}^{i} \left(H, {D}_{n}\right)}{\left({D}_{n + 1}-{D}_{n}\right)} . \left(D-{D}_{n}\right)$
wo n eine positive ganze Zahl ist.

9. Verfahren (100) nach einem der Ansprüche 6 bis 8, wobei das Bestimmen der Koeffizienten *Cᵢⁱ_{'j'}* für den reduzierten Satz von Reihen i das Bestimmen des Beitrags ${R}_{i ′ j ′}^{i}$ umfasst, sodass: ${R}_{i ′ j ′}^{i} = {\int }_{y = j ′ . {p}_{y}}^{y = \left(j′+1\right) . {p}_{y}} {\int }_{z = \left(i′.{p}_{z}-H\right)}^{z = \left(i′+1\right) . {p}_{z} - H} {\int }_{0}^{{E}_{M}} I \left(E, θ\right) . {μ}_{en} \left(E\right) . E . \frac{{e}^{- \frac{μ \left(E\right) . y}{cos \left(θ\right)}}}{{\left(D+y\right)}^{2}} . cos \left(θ\right) . u \left(cos\left({θ}_{i}\right)-cos\left(θ\right)\right) . u \left(\begin{matrix}cos \left(θ\right) \\ - cos \left({θ}_{i + 1}\right)\end{matrix}\right) . dE . dz . dy$ wo:
E=eine Variable, die der Energie der Inspektionsstrahlung zugeordnet ist,
*E_{M}*=ein Maximum der Energie der Inspektionsstrahlung,
*θ*=ein Auftreffwinkel der Inspektionsstrahlung auf die Anordnung in der Transmissionsebene (YOZ), wobei eine y-Achse parallel zur Tiefenrichtung und eine z-Achse parallel zur Längsrichtung verläuft, sodass: $tan \left(θ\right) = \left(\frac{z - H}{D + y}\right) ,$ $cos \left(θ\right) = \sqrt{\frac{1}{1 + {\left(\frac{z - H}{D + y}\right)}^{2}}} ,$
*θᵢ* =ein Auftreffwinkel der Inspektionsstrahlung auf Reihe i, sodass: $tan \left({θ}_{i}\right) = \left(\frac{i . {p}_{z} - H}{D}\right) ,$
*I*(*E*,*θ*)=Spektral- und Winkelverteilungen der Inspektionsstrahlung,
*µₑₙ*(*E*). E=eine mittlere Einlagerungsenergie in der Detektorzelle für ein Photon der Energie E und
*u*=eine Stufenfunktion, oder
wobei das Bestimmen der Koeffizienten *Cᵢⁱ_{'j}* für den reduzierten Satz von Reihen i das Bestimmen des Beitrags ${R}_{i ′ j ′}^{i}$, sodass: ${R}_{i ′ j ′}^{i} = {\int }_{y = j ′ . {p}_{y}}^{y = \left(j′+1\right) . {p}_{y}} {\int }_{z = \left(i′.{p}_{z}-H\right)}^{z = \left(i′+1\right) . {p}_{z} - H} \frac{1}{{\left(D+y\right)}^{2}} . cos \left(θ\left(x, y\right)\right) . u \left(cos\left({θ}_{i}\right)-cos\left(θ\left(x, y\right)\right)\right) . u \left(cos\left(\begin{matrix}θ \left(x, y\right) \\ - cos \left({θ}_{i + 1}\right)\end{matrix}\right)dz.dy\right.$ wo:
*θ*=ein Auftreffwinkel der Inspektionsstrahlung auf die Anordnung in der Transmissionsebene (YOZ), wobei eine y-Achse parallel zur Tiefenrichtung und eine z-Achse parallel zur Längsrichtung verläuft, sodass: $tan \left(θ\right) = \left(\frac{z - H}{D + y}\right) ,$ $cos \left(θ\right) = \sqrt{\frac{1}{1 + {\left(\frac{z - H}{D + y}\right)}^{2}}} ,$
*θᵢ* =ein Auftreffwinkel der Inspektionsstrahlung auf Reihe i, sodass: $tan \left({θ}_{i}\right) = \left(\frac{i . {p}_{z} - H}{D}\right)$ und
wobei eine x-Achse senkrecht sowohl zur Tiefenrichtung als auch zur Längsrichtung verläuft, oder
wobei das Bestimmen der Koeffizienten *Cᵢ^{i,}_{j'}* für den reduzierten Satz von Reihen i das Verwenden eines Monte-Carlo-Verfahrens umfasst, das dazu konfiguriert ist, Folgendes zu berechnen:
Winkel- und Spektralverteilungen der Inspektionsstrahlung und/oder
eine Simulation, die dazu konfiguriert ist, eine Energieeinlagerung in der Detektorzelle (i',j') zu schätzen.

10. Verfahren (100) nach einem der Ansprüche 6 bis 9, wobei das Bestimmen der Koeffizienten *Cᵢⁱ_{'j'}* für den reduzierten Satz von Reihen i Folgendes umfasst:
Bestimmen der anfänglichen Koeffizienten *Cᵢⁱ_{'j'}* und Generieren eines Bildes *I^{c}* des Frachtguts basierend auf den bestimmten anfänglichen Koeffizienten *Cᵢⁱ_{'j'}*;
Generieren eines Bildes *I^{a}* des Frachtguts basierend auf anfänglichen angepassten Koeffizienten *Cᵢⁱ_{'j'}*, die den angepassten, ermittelten Anfangskoeffizienten *Cᵢⁱ_{'j'}* entsprechen; und
Bestimmen der endgültigen angepassten Koeffizienten *Cᵢⁱ_{'j'}* durch Minimieren eines Kriteriums, sodass: ${\sum }_{Bilder} {\sum }_{i} \left({\left({I}_{i}^{a}-{I}_{i}^{c}\right)}^{2}+\frac{m}{{\left(∇ {I}^{a}\right)}_{i}^{2}}\right)$
wo V ein Gradientenoperator und m ein positiver Parameter ist,
optional wobei die Signaldaten *S_{i'j'}* einem Frachtgut mit scharfen Kanten zugeordnet sind.

11. Verfahren (100) nach einem der Ansprüche 1 bis 10, wobei
ein Abstand p_{y} zwischen den Spalten der Anordnung in der Richtung parallel zur Tiefenrichtung der Anordnung eine Konstante ist, oder
ein Abstand p_{y} zwischen den Spalten der Anordnung in der Richtung parallel zur Tiefenrichtung der Anordnung entlang der Richtung parallel zur Tiefenrichtung der Anordnung variiert, wobei vorzugsweise der Abstand p_{y} mit zunehmendem Abstand von der Strahlungsquelle zunimmt, oder
wobei:
ein Material der Detektorzellen für alle Detektorzellen der Anordnung identisch ist, oder
ein Material mindestens einiger der Detektorzellen unterschiedlich von dem Material mindestens einiger anderer Detektorzellen der Anordnung ist,
optional wobei:
einige Spalten, die näher an der Strahlungsquelle liegen, aus einem Material mit niedrigerer Ordnungszahl bestehen, und
einige Spalten, die weiter von der Strahlungsquelle entfernt sind, aus einem Material mit höherer Ordnungszahl bestehen.

12. Verfahren (100) nach einem der Ansprüche 1 bis 11, wobei jede Reihe in Bezug auf eine benachbarte Reihe in der Anordnung in der Richtung parallel zur Längsrichtung der Anordnung verschoben wird,
optional wobei:
die Verschiebung zwischen zwei aufeinanderfolgenden Spalten der Anordnung zwischen einer positiven Verschiebung und einer negativen Verschiebung wechselt, oder
die Verschiebung zwischen zwei aufeinanderfolgenden Spalten der Anordnung für die gesamte Anordnung konstant positiv oder konstant negativ ist.

13. Verfahren (100) nach einem der Ansprüche 1 bis 12, ferner umfassend das Generieren eines Inspektionsbildes des Frachtguts basierend auf dem bestimmten Fluss *Iᵢ* der Inspektionsstrahlung, die auf die Reihe i auftrifft, für jede Reihe i, wie z. B. 1≤i≤L, oder
angewendet auf ein Inspektionssystem, das eine Vielzahl von Strahlungsquellen für eine einzelne Anordnung umfasst, wie z. B. ein Mehrfachansicht-Inspektionssystem und/oder ein Inspektionssystem zur Inspektion von Doppelstockfahrzeugen und/oder ein Inspektionssystem, das eine Quelle umfasst, die dazu konfiguriert ist, sich relativ zur Anordnung zu bewegen.

14. Gerät (150), umfassend:
einen Prozessor (151); und
einen Speicher (152), der Anweisungen speichert, die, wenn sie vom Prozessor ausgeführt werden, es dem Gerät ermöglichen, das Verfahren (100) nach einem der Ansprüche 1 bis 13 durchzuführen; oder
umfassend eine Vielzahl von Anordnungen.

15. Computerprogramm oder Computerprogrammprodukt, umfassend Anweisungen, die, wenn sie von einem Prozessor ausgeführt werden, es dem Prozessor ermöglichen, das Verfahren (100) nach einem der Ansprüche 1 bis 13 durchzuführen.

## Revendications

1. Procédé (100) permettant de déterminer un flux de rayonnement d'inspection,
le rayonnement d'inspection étant émis par une source de rayonnement et transmis à travers une cargaison à inspecter sensiblement dans un plan de transmission (YOZ),
le flux de rayonnement d'inspection étant incident, après transmission à travers la cargaison, sur au moins un réseau de cellules de détection s'étendant dans un plan sensiblement parallèle au plan de transmission (YOZ), le réseau ayant une direction en profondeur et une direction longitudinale sensiblement perpendiculaire à la direction en profondeur,
les cellules de détection étant configurées en une première pluralité L formant sensiblement des rangées du réseau, chaque rangée de cellules de détection s'étendant sensiblement le long d'une direction parallèle à la direction en profondeur du réseau,
les cellules de détection étant en outre configurées en une seconde pluralité λ formant sensiblement au moins deux colonnes du réseau, chaque colonne de cellules de détection s'étendant sensiblement le long d'une direction parallèle à la direction longitudinale du réseau,
le procédé consistant à :
obtenir (S1) des données de signal *S_{i'j'}* associées à chaque cellule de détection du réseau, chaque cellule de détection étant située en (i',j') au niveau d'une intersection d'une colonne j' et d'une rangée i' du réseau, les données de signal S obtenues pour le réseau de cellules de détection étant telles que : $S = F \left(I, R\right)$
avec *I* étant un ensemble de flux correspondant au flux du rayonnement d'inspection incident sur les rangées du réseau,
*R* étant un agencement de contribution de coefficients ${R}_{i ′ j ′}^{i}$ pour le réseau de cellules de détection, représentant une contribution d'un faisceau du rayonnement d'inspection, incident sur la rangée i telle que 1≤i≤L, aux données de signal *S_{i'j'}* de la cellule de détection située en (i',j') incidente sur les rangées i du réseau, et
*F* étant une fonction connue de *I* et *R* ; et
déterminer (S2) le flux *Iᵢ* du rayonnement d'inspection incident sur la rangée i, pour chaque rangée i telle que 1≤i≤L, sur la base des données de signal *S_{i'j'}* obtenues et du coefficient ${R}_{i ′ j ′}^{i}$ pour chaque cellule de détection située en (i',j') au niveau de l'intersection de la colonne j' et de la rangée i' du réseau.

2. Procédé (100) selon la revendication 1, consistant en outre à normaliser (S12) les données de signal S obtenues, de telle sorte que : ${S}_{i ′ j ′}^{N} = \frac{{S}_{i ′ j ′}}{{S}_{i ′ j ′}^{0}}$
avec ${S}_{i ′ j ′}^{0}$ étant un signal obtenu lorsqu'aucun objet n'est placé dans le rayonnement d'irradiation ; et
consistant en outre à normaliser l'agencement de contribution *R*, de telle sorte que : ${C}_{i ′ j ′}^{i} = \frac{{R}_{i ′ j ′}^{i}}{{\sum }_{k = 1}^{L} {R}_{i ′ j ′}^{k}}$
de telle sorte que : ${S}^{N} = {F}^{N} \left(I, C\right)$
avec *F^{N}* étant une fonction connue de *I* et *C*.

3. Procédé (100) selon la revendication 1 ou 2, la fonction *F* étant la probabilité conditionnelle de *S* sachant *I* et *R*, de telle sorte que : $F \left(I, R\right) = P \left(S\left|I, R\right.\right) ,$
éventuellement, le procédé consistant en outre à normaliser les données de signal S obtenues, de telle sorte que : ${S}_{i ′ j ′}^{N} = \frac{{S}_{i ′ j ′}}{{S}_{i ′ j ′}^{0}}$
avec ${S}_{i ′ j ′}^{0}$ étant un signal obtenu lorsqu'aucun objet n'est placé dans le rayonnement d'irradiation ; et
consistant en outre à normaliser l'agencement de contribution *R*, de telle sorte que : ${C}_{i ′ j ′}^{i} = \frac{{R}_{i ′ j ′}^{i}}{{\sum }_{k = 1}^{L} {R}_{i ′ j ′}^{k}}$
de telle sorte que : ${S}^{N} = {F}^{N} \left(I, C\right)$ avec *F^{N}* étant une fonction connue de *I* et *C*,
la fonction *F* étant la probabilité conditionnelle de telle sorte que : ${F}^{N} \left(I, C\right) = P \left({S}^{N}\left|I, C\right.\right) ,$
éventuellement, la détermination du flux *Iᵢ* du rayonnement d'inspection incident sur la rangée i, pour chaque rangée i telle que 1≤i≤L, consistant à maximiser la probabilité *P*(*S*|*I, R*) ou la probabilité *P*(*S^{N}*|*I, C*) par une estimation du maximum de vraisemblance et/ou par une estimation de la log-vraisemblance.

4. Procédé (100) selon la revendication 1 ou 2, la fonction connue *F* étant une fonction linéaire telle que : ${S}_{i ′ j ′} = {\sum }_{i = 1}^{L} {R}_{i ′ j ′}^{i} {I}_{i}$
avec *Iᵢ* étant le flux du rayonnement d'inspection incident sur la rangée i, et *Rᵢⁱ_{'j'}* représentant une contribution d'un faisceau du rayonnement d'inspection, incident sur la rangée i, aux données de signal *S_{i'j'}* de la cellule de détection située en (i',j'),
éventuellement, le procédé consistant en outre à normaliser les données de signal S obtenues, de telle sorte que : ${S}_{i ′ j ′}^{N} = \frac{{S}_{i ′ j ′}}{{S}_{i ′ j ′}^{0}}$
avec ${S}_{i ′ j ′}^{0}$ étant un signal obtenu lorsqu'aucun objet n'est placé dans le rayonnement d'irradiation ; et
consistant en outre à normaliser l'agencement de contribution *R*, de telle sorte que : ${C}_{i ′ j ′}^{i} = \frac{{R}_{i ′ j ′}^{i}}{{\sum }_{k = 1}^{L} {R}_{i ′ j ′}^{k}}$
de telle sorte que : ${S}^{N} = {F}^{N} \left(I, C\right)$ avec *F^{N}* étant une fonction connue de *I* et *C*,
la normalisation des données de signal ${S}_{i ′ j ′}^{N}$ obtenues pour chaque cellule de détection située en (i',j') étant telle que : ${S}_{i ′ j ′}^{N} = \frac{{S}_{i ′ j ′}}{{S}_{i ′ j ′}^{0}} = \frac{{S}_{i ′ j ′}}{{\sum }_{k = 1}^{L} {R}_{i ′ j ′}^{k} {I}_{k}^{0}} = \frac{{\sum }_{i = 1}^{L} {R}_{i ′ j ′}^{i} {I}_{i}}{{\sum }_{k = 1}^{L} {R}_{i ′ j ′}^{k} {I}_{k}^{0}} = {\sum }_{i} \left(\frac{{R}_{i ′ j ′}^{i} {I}_{i}}{{\sum }_{k = 1}^{L} {R}_{i ′ j ′}^{k}}\right) = {\sum }_{i} {C}_{i ′ j ′}^{i} {I}_{i}$
avec ${S}_{i ′ j ′}^{N} ∈ \left[0, 1\right]$,
avec ${S}_{i ′ j ′}^{0} = {\sum }_{i = 1}^{L} {R}_{i ′ j ′}^{i} {I}_{i}^{0}$ avec *Iᵢ*⁰ étant le flux de rayonnement d'inspection à pleine échelle obtenu lorsqu'aucun objet n'est placé dans le rayonnement d'irradiation, incident sur la rangée i,
avec *Iᵢ*⁰ étant choisi égal à 1 pour chaque rangée i telle que 1≤i≤L, ce qui implique que les *Iᵢ* aient des valeurs dans [0,1],
avec chaque coefficient *Cᵢⁱ_{'j'}* étant tel que ${C}_{i ′ j ′}^{i} = \frac{{R}_{i ′ j ′}^{i}}{{\sum }_{k}^{L} {R}_{i ′ j ′}^{k}}$, et
avec ${\sum }_{i} {C}_{i ′ j ′}^{i} = 1$; et
déterminer le flux *Iᵢ* du rayonnement d'inspection incident sur la rangée i, pour chaque rangée i telle que 1≤i≤L, sur la base des données de signal uniforme ${S}_{i ′ j ′}^{N}$ normalisées et du coefficient ${C}_{i ′ j ′}^{i}$ pour chaque cellule de détection située en (i',j') au niveau de l'intersection de la colonne j' et de la rangée i' du réseau,
éventuellement, la détermination du flux *Iᵢ* du rayonnement d'inspection incident sur la rangée i, pour chaque rangée i telle que 1≤i≤L, consistant à utiliser une régression des moindres carrés pour trouver un ensemble de flux *Iᵢ* qui minimise un critère Lₛ, de telle sorte que : ${L}_{S} = {\sum }_{i ′ , j ′} {\left({S}_{i ′ j ′}^{N}-{\sum }_{i} {C}_{i ′ j ′}^{i} {I}_{i}\right)}^{2} .$

5. Procédé (100) selon la revendication 4, l'ensemble de flux *Iᵢ* qui minimise le critère Lₛ étant déterminé au moyen d'une technique de minimalisation de gradient, ou
l'ensemble de flux *Iᵢ* qui minimise le critère Lₛ étant déterminé en déterminant une solution d'une équation matricielle Mₖᵢ telle que : $∀ k , {\sum }_{i ′ , j ′} {C}_{i ′ j ′}^{k} {S}_{i ′ j ′}^{N} = {\sum }_{i} \left({{{\sum }_{i ′ , j ′} {C}_{i ′ j ′}^{k} . {C}_{i ′ j ′}^{i}}_{︸}}_{{M}_{ki}}\right) . {I}_{i}$

6. Procédé selon la revendication 5, chaque coefficient *Cᵢⁱ_{'j'}* dépendant d'au moins un élément parmi :
une distance D entre la source de rayonnement et le réseau de cellules de détecteurs ; et/ou
une hauteur H de la source associée à une distance entre une première ligne parallèle à une partie inférieure du réseau et une seconde ligne parallèle à la première ligne et passant par la source de rayonnement ; et/ou
un pas p_{z} du réseau le long d'une direction parallèle à la direction longitudinale, et une distance p_{y} entre les colonnes du réseau le long d'une direction parallèle à la direction en profondeur des cellules, et
la détermination de la solution de l'équation matricielle Mₖᵢ consistant à conditionner la matrice Mₖᵢ de telle sorte que la matrice Mₖᵢ ne présente pas de coefficients significatifs éloignés de la diagonale de la matrice Mₖᵢ et à inverser la matrice Mₖᵢ,
éventuellement, le conditionnement de la matrice Mₖᵢ consistant à estimer chaque coefficient *Cᵢ^{i,}_{j'}* qui contribue aux termes de la matrice Mₖᵢ sensiblement autour de la diagonale de la matrice Mₖᵢ et à évaluer d'autres coefficients de la matrice Mₖᵢ à une valeur nulle,
éventuellement, l'estimation de chaque coefficient *Cᵢⁱ_{'j'}* sensiblement autour de la diagonale de la matrice Mₖᵢ consistant à, pour D>>p_{z} et D>>T, et pour une paire (H,D) donnée et une colonne j' donnée :
déterminer des coefficients *Cᵢⁱ_{'j'}* pour un ensemble réduit de rangées i ; et
interpoler d'autres coefficients *Cᵢⁱ_{'j'}*, sur la base des coefficients *Cᵢⁱ_{'j'}* déterminés pour l'ensemble réduit de rangées i.

7. Procédé (100) selon la revendication 6, les autres coefficients *Cᵢⁱ_{'j'}* étant interpolés sur la base des coefficients *Cᵢⁱ_{'j'}* déterminés pour l'ensemble réduit *iₚ* de rangées i, de telle sorte que : ${C}_{i ′ j ′}^{i} \approx {C}_{i ′ - \left(i-{i}_{p}\right) j ′}^{{i}_{p}} + \frac{\left({C}_{i ′ - \left(i-{i}_{p + 1}\right) j ′}^{{i}_{p} + 1}-{C}_{i ′ - \left(i-{i}_{p}\right) j ′}^{{i}_{p}}\right)}{\left({i}_{p + 1}-{i}_{p}\right)} . \left(i-{i}_{p}\right)$
avec *iₚ* ≤ *i* ≤ *i*_{*p*+1}, et
avec p étant un nombre entier positif, ou
pour H∈[(k-1/2).p_{z},(k+1/2).p_{z}], avec k étant un nombre entier positif, les autres coefficients *Cᵢⁱ_{'j'}* étant interpolés sur la base des coefficients *Cᵢⁱ_{'j'}* déterminés pour l'ensemble réduit de rangées i, de telle sorte que : ${C}_{i ′ j ′}^{i} \left(H, D\right) \approx {C}_{i ′ j ′}^{i} \left(\left(k-\frac{1}{2}\right).{p}_{z},D\right) + \frac{{C}_{i ′ - 1 j ′}^{i - 1} \left(\left(k-\frac{1}{2}\right).{p}_{z},D\right) - {C}_{i ′ j ′}^{i} \left(\left(k-\frac{1}{2}\right).{p}_{z},D\right)}{{p}_{z}} . \left(H-{p}_{z}\right) .$

8. Procédé (100) selon l'une quelconque des revendications 6 et 7, pour un déplacement de la source de rayonnement de k rangées de pas p_{z} le long de la direction parallèle à la direction longitudinale, les coefficients étant tels que : ${C}_{i ′ j ′}^{i} \left(H\pm k.{p}_{z},D\right) = {C}_{i ′ ∓ k j ′}^{i ∓ k} \left(H, D\right)$
avec k étant un nombre entier positif,
à l'exception des coefficients correspondant aux k premières lignes du réseau pour un déplacement positif de la source de rayonnement, ou à l'exception des coefficients correspondant aux k dernières lignes du réseau pour un déplacement négatif de la source de rayonnement, ou
pour un déplacement de la source de rayonnement le long de la direction parallèle à la direction en profondeur, les coefficients étant tels que : ${C}_{i ′ j ′}^{i} \left(H, D\right) \approx {C}_{i ′ j ′}^{i} \left(H, {D}_{n}\right) + \frac{{C}_{i ′ j ′}^{i} \left(H, {D}_{n + 1}\right) - {C}_{i ′ j ′}^{i} \left(H, {D}_{n}\right)}{\left({D}_{n + 1}-{D}_{n}\right)} . \left(D-{D}_{n}\right)$
avec n étant un nombre entier positif.

9. Procédé (100) selon l'une quelconque des revendications 6 à 8, la détermination des coefficients *Cᵢⁱ_{'j'}* pour l'ensemble réduit de rangées i consistant à déterminer la contribution ${R}_{i ′ j ′}^{i}$ de telle sorte que : ${R}_{i ′ j ′}^{i} = {\int }_{y = j ′ . {p}_{y}}^{y = \left(j′+1\right) . {p}_{y}} {\int }_{z = \left(i′.{p}_{z}-H\right)}^{z = \left(i′+1\right) . {p}_{z} - H} {\int }_{0}^{{E}_{M}} I \left(E, θ\right) . {μ}_{en} \left(E\right) . E . \frac{{e}^{- \frac{μ \left(E\right) . y}{cos \left(θ\right)}}}{{\left(D+y\right)}^{2}} . cos \left(θ\right) . u \left(cos\left({θ}_{i}\right)-cos\left(θ\right)\right) . u \left(\begin{matrix}cos \left(θ\right) \\ - cos \left({θ}_{i + 1}\right)\end{matrix}\right) . dE . dz . dy$ avec :
*E*=une variable associée à l'énergie du rayonnement d'inspection,
*E_{M}*=un maximum de l'énergie du rayonnement d'inspection,
*θ*=une incidence angulaire du rayonnement d'inspection sur le réseau dans le plan de transmission (YOZ), avec un axe y étant parallèle à la direction en profondeur et un axe z étant parallèle à la direction longitudinale, de telle sorte que : $tan \left(θ\right) = \left(\frac{z - H}{D + y}\right) ,$ $cos \left(θ\right) = \sqrt{\frac{1}{1 + {\left(\frac{z - H}{D + y}\right)}^{2}}} ,$
*θᵢ* =un angle d'incidence du rayonnement d'inspection sur la rangée i, de telle sorte que : $tan \left({θ}_{i}\right) = \left(\frac{i . {p}_{z} - H}{D}\right) ,$
*I*(*E*,*θ*)=des distributions spectrale et angulaire du rayonnement d'inspection,
*µₑₙ*(*E*)*. E*=une énergie moyenne de dépôt dans la cellule de détection pour un photon d'énergie E, et
*u*=une fonction échelon, ou
la détermination des coefficients *Cᵢⁱ_{'j'}* pour l'ensemble réduit de rangées i consistant à déterminer la contribution ${R}_{i ′ j ′}^{i}$ de telle sorte que : ${R}_{i ′ j ′}^{i} = {\int }_{y = j ′ . {p}_{y}}^{y = \left(j′+1\right) . {p}_{y}} {\int }_{z = \left(i′.{p}_{z}-H\right)}^{z = \left(i′+1\right) . {p}_{z} - H} \frac{1}{{\left(D+y\right)}^{2}} . cos \left(θ\left(x, y\right)\right) . u \left(cos\left({θ}_{i}\right)-cos\left(θ\left(x, y\right)\right)\right) . u \left(cos\left(\begin{matrix}θ \left(x, y\right) \\ - cos \left({θ}_{i + 1}\right)\end{matrix}\right)dz.dy\right.$ avec :
*θ*=une incidence angulaire du rayonnement d'inspection sur le réseau dans le plan de transmission (YOZ), avec un axe y étant parallèle à la direction en profondeur et un axe z étant parallèle à la direction longitudinale, de telle sorte que : $tan \left(θ\right) = \left(\frac{z - H}{D + y}\right) ,$ $cos \left(θ\right) = \sqrt{\frac{1}{1 + {\left(\frac{z - H}{D + y}\right)}^{2}}} ,$
*θᵢ* =un angle d'incidence du rayonnement d'inspection sur la rangée i, de telle sorte que : $tan \left({θ}_{i}\right) = \left(\frac{i . {p}_{z} - H}{D}\right) ,$ et
un axe x étant perpendiculaire à la fois à la direction en profondeur et à la direction longitudinale, ou
la détermination des coefficients *Cᵢⁱ_{'j'}* pour l'ensemble réduit de rangées i consistant à utiliser une méthode de Monte-Carlo configurée pour calculer :
des distributions angulaire et spectrale du rayonnement d'inspection, et/ou
une simulation configurée pour estimer un dépôt d'énergie dans la cellule de détection (i',j').

10. Procédé (100) selon l'une quelconque des revendications 6 à 9, la détermination des coefficients *Cᵢⁱ_{'j'}* pour l'ensemble réduit de rangées i consistant à :
déterminer des coefficients initiaux *Cᵢⁱ_{'j'}* et générer une image *I^{c}* de la cargaison, sur la base des coefficients initiaux *Cᵢⁱ_{'j'}* déterminés ;
générer une image *I^{a}* de la cargaison, sur la base de coefficients ajustés initiaux *Cᵢⁱ_{'j'}* correspondant à des coefficients initiaux déterminés ajustés *Cᵢⁱ_{'j'}* ; et
déterminer des coefficients ajustés finaux *Cᵢⁱ_{'j'}* minimisant un critère tel que : ${\sum }_{images} {\sum }_{i} \left({\left({I}_{i}^{a}-{I}_{i}^{c}\right)}^{2}+\frac{m}{{\left(∇ {I}^{a}\right)}_{i}^{2}}\right)$
avec ∇ étant un opérateur gradient, et m un paramètre positif,
éventuellement, les données de signal *S_{i'j'}* étant associées à une cargaison présentant des bords nets.

11. Procédé (100) selon l'une quelconque des revendications 1 à 10,
une distance p_{y} entre les colonnes du réseau dans la direction parallèle à la direction en profondeur du réseau étant une constante, ou
une distance p_{y} entre les colonnes du réseau dans la direction parallèle à la direction en profondeur du réseau variant le long de la direction parallèle à la direction en profondeur du réseau, de préférence la distance p_{y} augmentant avec une distance croissante depuis la source de rayonnement, ou
un matériau des cellules de détection étant identique pour toutes les cellules de détection du réseau, ou
un matériau d'au moins certaines des cellules de détection étant différent du matériau d'au moins certaines autres cellules de détection du réseau,
éventuellement :
certaines colonnes plus proches de la source de rayonnement étant constituées d'un matériau à numéro atomique plus faible, et
certaines colonnes plus éloignées de la source de rayonnement étant constituées d'un matériau à numéro atomique plus élevé.

12. Procédé (100) selon l'une quelconque des revendications 1 à 11, chaque rangée étant décalée, par rapport à une rangée adjacente dans le réseau dans la direction parallèle à la direction longitudinale du réseau,
éventuellement :
le décalage alternant entre un décalage positif et un décalage négatif entre deux colonnes consécutives du réseau, ou
le décalage étant constamment positif ou constamment négatif entre deux colonnes consécutives du réseau, pour tout le réseau.

13. Procédé (100) selon l'une quelconque des revendications 1 à 12, consistant en outre à générer une image d'inspection de la cargaison, sur la base du flux *Iᵢ* déterminé du rayonnement d'inspection incident sur la rangée i, pour chaque rangée i telle que 1≤i≤L, ou
appliqué à un système d'inspection comprenant une pluralité de sources de rayonnement pour un seul réseau, tel qu'un système d'inspection multivue et/ou un système d'inspection pour l'inspection de véhicules à deux niveaux et/ou un système d'inspection comprenant une source configurée pour se déplacer par rapport au réseau.

14. Appareil (150) comprenant :
un processeur (151) ; et
une mémoire (152) stockant des instructions qui, lorsqu'elles sont exécutées par le processeur, permettent au processeur de réaliser le procédé (100) selon l'une quelconque des revendications 1 à 13 ; ou
comprenant une pluralité de réseaux.

15. Programme informatique ou produit-programme informatique comprenant des instructions qui, lorsqu'elles sont exécutées par un processeur, permettent au processeur de réaliser le procédé (100) selon l'une quelconque des revendications 1 à 13.
